(19) Europäisches Patentamt
European Patent Office
Office européen des brevets

(11) **EP 4 280 071 A1**

(12) **EUROPEAN PATENT APPLICATION**
published in accordance with Art. 153(4) EPC

(43) Date of publication:
**22.11.2023 Bulletin 2023/47**

(21) Application number: **21920716.4**

(22) Date of filing: **18.11.2021**

(51) International Patent Classification (IPC):
***G06F 13/12*** *(2006.01)*

(52) Cooperative Patent Classification (CPC):
**G06F 13/12; G06F 16/29**

(86) International application number:
**PCT/CN2021/131568**

(87) International publication number:
**WO 2022/156340 (28.07.2022 Gazette 2022/30)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.01.2021 CN 202110090015**

(71) Applicant: **Huawei Technologies Co., Ltd.**
**Shenzhen, Guangdong 518129 (CN)**

(72) Inventors:
• **QIAO, Dezhi**
**Shenzhen, Guangdong 518129 (CN)**
• **LIU, Jianqin**
**Shenzhen, Guangdong 518129 (CN)**

(74) Representative: **Huawei European IPR**
**Huawei Technologies Duesseldorf GmbH**
**Riesstraße 25**
**80992 München (DE)**

(54) **METHOD AND APPARATUS FOR PROCESSING DYNAMIC INFORMATION RELATED TO TRAFFIC**

(57)    This application relates to the field of intelligent vehicles, and in particular, to a traffic-related dynamic information processing method and an apparatus. This method is applicable to scenarios such as internet of vehicles, connected vehicles, and autonomous driving, and can resolve a problem that a service device pushes useless dynamic information to a terminal device. The method includes: The service device determines a target set category from at least two preset set categories based on target category indication information corresponding to the terminal device (S 110). Herein, different category indication information corresponds to different set categories, and content of dynamic information included in dynamic information sets of different set categories is different. The service device determines a target dynamic information set based on the target set category and at least one type of dynamic information (S 120), and sends the target dynamic set to the terminal device. By using the provided method, communication resources and data processing resources of the service device and terminal device can be saved.

FIG. 2

**Description**

This application claims priority to Chinese Patent Application No. 202110090015.1, filed with the China National Intellectual Property Administration on January 22, 2021 and entitled "TRAFFIC-RELATED DYNAMIC INFORMATION PROCESSING METHOD AND APPARATUS", which is incorporated herein by reference in its entirety.

**TECHNICAL FIELD**

This application relates to the field of intelligent vehicles, and in particular, to a traffic-related dynamic information processing method and an apparatus.

**BACKGROUND**

With continuous development of Internet technologies and manufacturing technologies, intelligent driving vehicles gradually enter people's lives. A so-called intelligent driving vehicle is a vehicle that senses a road environment via an in-vehicle sensor system, that automatically plans a driving route, and that controls the vehicle to reach a predetermined target. In an actual application, traffic-related dynamic information mainly includes information that changes in real time, for example, road water accumulation, road snow accumulation, traffic accidents, traffic congestion, road construction, and traffic control. However, as description or representation information of the road environment, the traffic-related dynamic information is an important prerequisite or an indispensable part for implementing an intelligent driving vehicle technology. Therefore, obtaining and transmission of the traffic-related dynamic information has become a current hot research topic.

In a conventional technology, a crowdsourcing vehicle, a roadside unit (roadside unit, RSU), or a third-party cloud (such as a transportation cloud or an e-Government cloud) usually obtains dynamic information and transmits the dynamic information to a map server. Then, the map server performs corresponding processing on the dynamic information, and continues to forward the dynamic information to a terminal device (such as an RSU, a vehicle-mounted terminal, or a third-party application platform). In an actual application, the terminal device may have no requirement for some dynamic information, but the map server still completely forwards the dynamic information to the terminal device after receiving the dynamic information. In this way, the terminal device receives some useless dynamic information, and this causes a waste of communication resources and data processing resources of the terminal device and the map server.

**SUMMARY**

To resolve the foregoing problem, this application provides a traffic-related dynamic information processing method and an apparatus, to avoid a waste of communication resources and data processing resources caused by transmission of useless dynamic information.

It should be noted that the method provided in embodiments of this application may be performed by a computing device that supports a wireless communication function. The computing device refers to a device that can be abstracted as a computer system. In embodiments of this application, in one case, the computing device may be an entire system of a service device, or some components in the service device, for example, a chip system having a wireless communication function in the service device or a logic circuit (such as a field programmable gate array (field programmable gate array, FPGA)). Herein, the service device may be specifically a local server or a cloud server having a high-precision map service function, an RSU having a data processing capability, or the like. The some components in the service device may be specifically a local server, a cloud server, a system chip in an RSU, a wireless communication module (such as a communication chip including a radio frequency processing chip and a baseband processing chip) serving the system chip, and the like. In another case, the computing device may alternatively be an entire system of the terminal device, or some components in the terminal device, for example, a chip system or a logic circuit that has a wireless communication function in the terminal device. Herein, the terminal device may be specifically an intelligent vehicle, a remote information processing box (telematics box, T-box) on the intelligent vehicle, or the like, and the some components in the terminal device may be an in-vehicle system of the intelligent vehicle, a system chip and a communication chip of the T-box of the intelligent vehicle, and the like. It should be understood herein that the foregoing descriptions of the service device or the terminal device are examples, and are not specifically limited. For ease of understanding and differentiation, the service device and the terminal device are together used for description below as replacements.

According to a first aspect, an embodiment of this application provides a traffic-related dynamic information processing method. The method is applicable to the foregoing service device. The method includes: first determining a target set category from at least two preset set categories based on target category indication information corresponding to a terminal device, where different category indication information corresponds to different set categories, content of dynamic information included in dynamic information sets of different set categories is different, and any dynamic information set includes one or more pieces of dynamic information; and then determining a target dynamic information set based on the target set category and at least one type of dynamic information, and sending the target dynamic set to the terminal device.

In embodiments of this application, the dynamic information sets correspond to a plurality of different set categories, and the content of the dynamic information corresponding to the different set categories is different. In a process of pushing a dynamic information set to the terminal device, the service device first determines, based on the target category indication information corresponding to the terminal device, a set category (namely, the target set category) of a dynamic information set used by the terminal device, then generates the target dynamic information set of the target set category, and pushes the target dynamic information set to the terminal device. In this way, it can be ensured that all content of dynamic information included in the target dynamic information set meets a requirement of the terminal device, and the service device does not push some useless dynamic information to the terminal device, so that communication resources and data processing resources of the service device and the terminal device can be saved.

With reference to the first aspect, in a feasible implementation, a target category indication identifier may be generated and sent to the terminal device. The target category indication identifier is used by the terminal device to determine the target set category. In this way, the terminal device can easily and conveniently determine the target set category of the target dynamic information set, thereby reducing a data processing amount of the terminal device.

With reference to the first aspect, in a feasible implementation, types of the dynamic information included in the dynamic information sets of the different set categories are different. Herein, the dynamic information sets of the different set categories are distinguished based on the types of the dynamic information included in the dynamic information sets. Therefore, content included in the dynamic information sets can be refined, so that the service device can subsequently accurately obtain, through screening for the terminal device based on the obtained target set category, content of dynamic information used by the terminal device, and send the content to the terminal device based on the target dynamic information set. In this way, content of dynamic information that is not used may be not transmitted between the service device and the terminal device, thereby saving the communication resources and the data processing resources of the service device and the terminal device.

With reference to the first aspect, in a feasible implementation, the target category indication information includes an autonomous driving level or a device sensing capability level of the terminal device.

With reference to the first aspect, in a feasible implementation, any piece of dynamic information includes one or more dynamic attributes, and types of dynamic attributes in dynamic information that is of a same type and that is included in the dynamic information sets of the different set categories are different. Herein, the dynamic information sets of the different set categories are distinguished based on different attribute levels of one or more pieces of dynamic information in the dynamic information sets. Therefore, types of the dynamic information sets are refined, so that the service device can subsequently accurately push, to the terminal device based on the obtained target set category, content of dynamic information used by the terminal device. In this way, content of dynamic information that is not used may be accurately not transmitted between the service device and the terminal device, thereby saving the communication resources and the data processing resources of the service device and the terminal device.

With reference to the first aspect, in a feasible implementation, the target category indication information includes weather status information of an area in which the terminal device is located.

With reference to the first aspect, in a feasible implementation, any piece of dynamic information includes one or more dynamic attributes, and attribute granularities of dynamic attributes that are of a same type and that are in a same type of dynamic information included in the dynamic information sets of the different set categories are different. Herein, the dynamic information sets of the different set categories are distinguished based on different attribute granularities of a dynamic attribute included in dynamic information in the dynamic information sets. Therefore, the types of the dynamic information sets are more refined, so that the service device can subsequently more accurately push, to the terminal device based on the obtained target set category, the content of dynamic information used by the terminal device. In this way, the content of the dynamic information that is not used is more accurately not transmitted between the service device and the terminal device, thereby saving the communication resources and the data processing resources of the service device and the terminal device.

With reference to the first aspect, in a feasible implementation, the target category indication information includes a tariff level of the terminal device.

With reference to the first aspect, in a feasible implementation, the target category indication information is determined by the terminal device based on one or more of the autonomous driving level or the device sensing capability level of the terminal device, the weather status information of the area in which the terminal device is located, or the tariff level of the terminal device. The terminal device determines the target category indication information and notifies the service device of the target category indication information, so that a data processing amount of the service device can be reduced, and generation efficiency of the target dynamic information set can be improved.

According to a second aspect, an embodiment of this application provides a traffic-related dynamic information processing method, and the method is applicable to a terminal device. The method includes: receiving a target dynamic information set from a service device, where the target dynamic information set includes at least one type of target dynamic information; and performing data parsing on the target dynamic information set based on a target set category corresponding to the target dynamic information set, to extract the at least one type of target dynamic information, where content of dynamic information included in dynamic information sets of different set categories is different.

With reference to the second aspect, in a feasible implementation, a target category indication identifier is received from the service device. The target category indication identifier is determined by the service device based on an autonomous driving level or a device sensing capability of the terminal device. The target set category is determined based on the target category indication identifier.

With reference to the second aspect, in a feasible implementation, types of the dynamic information included in the dynamic information sets of the different set categories are different.

With reference to the second aspect, in a feasible implementation, any piece of dynamic information includes one or more dynamic attributes, and types of dynamic attributes in dynamic information that is of a same type and that is included in the dynamic information sets of the different set categories are different.

With reference to the second aspect, in a feasible implementation, any piece of dynamic information includes one or more dynamic attributes, and attribute granularities of dynamic attributes that are of a same type and that are in a same type of dynamic information included in the dynamic information sets of the different set categories are different.

According to a third aspect, an embodiment of this application provides a traffic-related dynamic information processing method, and the method is applicable to a terminal device. The method includes: determining a target set category from at least two preset set categories, where content of dynamic information included in dynamic information sets of different set categories is different, and any dynamic information set includes one or more pieces of dynamic information; and determining a target dynamic information set based on the target set category and at least one type of dynamic information.

With reference to the third aspect, in a feasible implementation, target category indication information corresponding to the terminal device may be obtained, and the target set category is determined from the at least two preset set categories based on the target category indication information.

With reference to the third aspect, in a feasible implementation, types of the dynamic information included in the dynamic information sets of the different set categories are different.

With reference to the third aspect, in a feasible implementation, the target category indication information includes an autonomous driving level or a device sensing capability level of the terminal device.

With reference to the third aspect, in a feasible implementation, any piece of dynamic information includes one or more dynamic attributes, and types of dynamic attributes in dynamic information that is of a same type and that is included in the dynamic information sets of the different set categories are different.

With reference to the third aspect, in a feasible implementation, the target category indication information includes weather status information of an area in which the terminal device is located.

With reference to the third aspect, in a feasible implementation, any piece of dynamic information includes one or more dynamic attributes, and attribute granularities of dynamic attributes that are of a same type and that are in a same type of dynamic information included in the dynamic information sets of the different set categories are different.

With reference to the third aspect, in a feasible implementation, the target category indication information includes a tariff level of the terminal device.

In this embodiment, the terminal device first determines, from a plurality of preset set categories, the target category set corresponding to the terminal device, and then obtains, from the at least one piece of dynamic information through screening based on the target category set, dynamic information used by the terminal device, and generates the target dynamic information set. In this way, the terminal device can be prevented from further processing useless dynamic information received by the terminal device, so that data processing resources of the terminal device can be saved.

According to a fourth aspect, an embodiment of this application provides an apparatus. The apparatus may be a service device, or may be a component or a module such as a chip inside the service device. The apparatus includes units configured to perform the traffic-related dynamic information processing method provided in any possible implementation of the first aspect. Therefore, the apparatus can also implement beneficial effects (or advantages) of the traffic-related dynamic information processing method provided in the first aspect.

According to a fifth aspect, an embodiment of this application provides an apparatus. The apparatus may be a terminal device, or may be a component or a module such as a chip inside the terminal device. The apparatus includes units configured to perform the traffic-related dynamic information processing method provided in any possible implementation of the second aspect or the third aspect. Therefore, the apparatus can also implement beneficial effects (or advantages) of the traffic-related dynamic information processing method provided in the second aspect.

According to a sixth aspect, an embodiment of this application provides an apparatus. The apparatus may be a service device. The apparatus includes at least one memory and a processor. The processor is configured to invoke code stored in the memory, to perform the traffic-related dynamic information processing method provided in any possible implementation of the first aspect.

According to a seventh aspect, an embodiment of this application provides an apparatus. The apparatus may be a terminal device. The apparatus includes at least one memory and a processor. The processor is configured to invoke code stored in the memory, to perform the traffic-related dynamic information processing method provided in any possible implementation of the second aspect or the third aspect.

According to an eighth aspect, an embodiment of this application provides a chip. The chip includes at least one processor and an interface circuit. The interface circuit is configured to receive code instructions, and transmit the code instructions to the processor. The processor is configured to run the code instructions to implement the traffic-related dynamic information processing method provided in any one of the first aspect, the second aspect, the third aspect, or the possible implementations thereof. Therefore, the processor can also implement beneficial effects (or advantages) of the traffic-related dynamic information processing method provided in any one of the first aspect, the second aspect, the third aspect, or the possible implementations thereof.

According to a ninth aspect, an embodiment of this application provides a computer-readable storage medium. The computer-readable storage medium stores instructions. When the instructions are run on a computer, the traffic-related dynamic information processing method provided in any solution or any possible implementation of the first aspect, the second aspect, or the third aspect can be implemented. Therefore, beneficial effects (or advantages) of the traffic-related dynamic information processing method provided in the first aspect, the second aspect, or the third aspect can also be implemented.

According to a tenth aspect, an embodiment of this application provides a computer program product including instructions. When the computer program product runs on a computer, the computer is enabled to perform the traffic-related dynamic information processing method provided in any solution or any possible implementation of the first aspect, the second aspect, or the third aspect. Therefore, beneficial effects (or advantages) of the traffic-related dynamic information processing method provided in the first aspect, the second aspect, or the third aspect can also be implemented.

According to an eleventh aspect, an embodiment of this application provides a communication system, and the communication system includes the service device provided in the first aspect and the terminal device provided in any one of the second aspect or the possible implementations of the second aspect, or the terminal device provided in any one of the third aspect or the possible implementations of the third aspect.

In the method provided in embodiments of this application, dynamic information sets correspond to a plurality of different set categories, and content of dynamic information corresponding to the different set categories is different. In a process of pushing the dynamic information set to the terminal device, the service device first determines, based on the target category indication information corresponding to the terminal device, the set category (namely, the target set category) of the dynamic information set used by the terminal device, then generates the target dynamic information set of the target set category, and pushes the target dynamic information set to the terminal device. In this way, all the content of the dynamic information included in the target dynamic information set meets the requirement of the terminal device, and the service device does not push some useless dynamic information to the terminal device, so that the communication resources and the data processing resources of the service device and the terminal device can be saved.

**BRIEF DESCRIPTION OF THE DRAWINGS**

FIG. 1 is a schematic diagram of an architecture of a communication system according to an embodiment of this application;

FIG. 2 is a schematic flowchart of a traffic-related dynamic information processing method according to an embodiment of this application;

FIG. 3 is another schematic flowchart of a traffic-related dynamic information processing method according to an embodiment of this application;

FIG. 4 is still another schematic flowchart of a traffic-related dynamic information processing method according to an embodiment of this application;

FIG. 5 is yet another schematic flowchart of a traffic-related dynamic information processing method according to an embodiment of this application;

FIG. 6 is a schematic diagram of a structure of an apparatus according to an embodiment of this application;

FIG. 7 is a schematic diagram of another structure of an apparatus according to an embodiment of this application;

FIG. 8 is a schematic diagram of a structure of a chip according to an embodiment of this application; and

FIG. 9 is a schematic diagram of still another structure of an apparatus according to an embodiment of this application.

**DESCRIPTION OF EMBODIMENTS**

The following clearly and completely describes the technical solutions in embodiments of this application with reference to the foregoing concepts and other accompanying drawings provided in embodiments of this application.

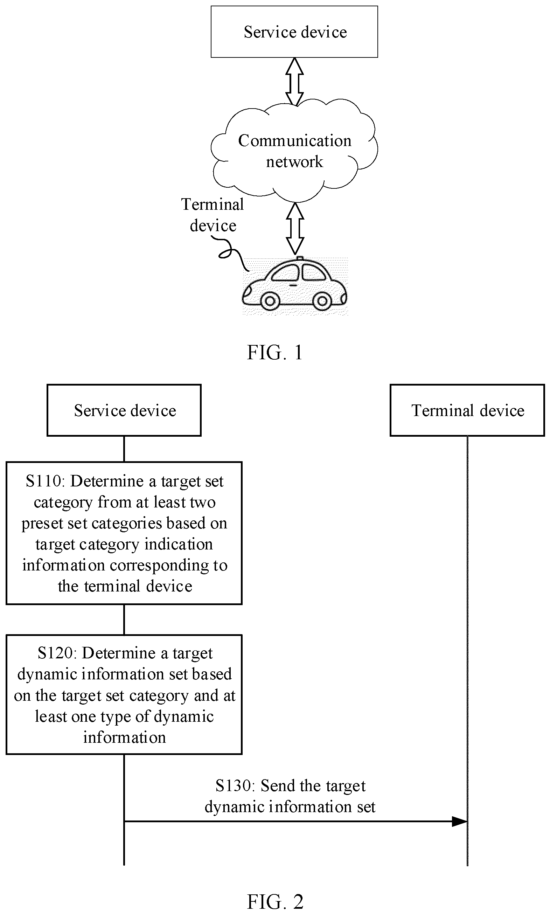

FIG. 1 is a schematic diagram of an architecture of a communication system according to an embodiment of this application. A traffic-related dynamic information processing method provided in embodiments of this application is applicable to the communication system. It can be learned from FIG. 1 that the communication system may include at least one service device and at least one terminal device. The service device communicates with the terminal device via a wireless network. The wireless network may be constructed based on a long term evolution (long term evolution, LTE) system, a universal mobile telecommunications system (universal mobile telecommunications system, UMTS), a worldwide interoperability for microwave access (worldwide interoperability for microwave access, WiMAX) communication system, a 5th generation (5th generation, 5G) system, a new radio (new radio, NR) system, or the like. This is not specifically limited in this application.

In embodiments of this application, the service device may be specifically a local server or a cloud server of map software used by the terminal device, and the server has a high-precision map service function. Alternatively, the service device may be an RSU or the like that establishes a communication connection to the terminal device. The terminal device may be an intelligent vehicle, an in-vehicle system in the intelligent vehicle, or the like. Herein, the intelligent vehicles include vehicles of various types. The in-vehicle system in the intelligent vehicle may include in-vehicle software (namely, a computing platform) and hardware (for example, a camera, a radar, or a processing chip).

In a conventional technology, the service device usually first obtains one or more pieces of dynamic information based on a crowdsourcing vehicle, an RSU, or a third-party cloud (such as a transportation cloud or an e-Government cloud), then performs corresponding processing on the dynamic information, and sends the dynamic information to the terminal device one by one. It should be noted herein that there are a plurality of types of dynamic information provided in this application, for example, road water accumulation information, road snow accumulation information, traffic accident information, traffic congestion information, road construction information, and weather information. However, in an actual application, the terminal device may have no requirement for some dynamic information (in other words, the dynamic information is useless for the terminal device), while after obtaining the dynamic information, the service device still forwards all content of the dynamic information to the terminal device. In this way, some useless dynamic information is transmitted between the service device and the terminal device, causing a waste of communication resources and data processing resources of the terminal device and the service device.

Therefore, how to avoid transmission of the useless dynamic information between the service device and the terminal device to save the communication resources and the data processing resources of the service device and the terminal device is a technical problem to be resolved in this application.

**Embodiment 1**

FIG. 2 is a schematic flowchart of a traffic-related dynamic information processing method according to an embodiment of this application. The method is applicable to the communication system shown in FIG. 1. The method may be specifically performed by the service device and the terminal device described above. It can be learned from FIG. 2 that the processing method includes the following steps.

S110: The service device determines a target set category from at least two preset set categories based on target category indication information corresponding to the terminal device.

In some feasible implementations, after determining that one or more pieces of dynamic information need to be pushed to the terminal device, the service device may first obtain the target category indication information corresponding to the terminal device. Then, the service device may determine the target set category from the at least two preset set categories based on the target category indication information. Herein, the target set category is a set category corresponding to a target dynamic information set used by the terminal device. It should be further noted that, in embodiments of this application, one dynamic information set may include one or more pieces of dynamic information, a plurality of different set categories are preconfigured for the service device, and each set category corresponds to specific category indication information. In addition, the plurality of set categories are also obtained through classification in advance according to a preset set category classification rule, and content of dynamic information included in dynamic information sets of different set categories is different.

In a specific implementation, this embodiment provides a plurality of set category classification rules. The following describes, with reference to the plurality of set category classification rules, in detail a plurality of implementations in which the service device determines the target set category.

Implementation 1

In this implementation, a set category classification rule is as follows: If types of dynamic information included in dynamic information sets are different, set categories are different. In other words, the set categories of the dynamic information sets are classified based on the types of the dynamic information included in the dynamic information sets. For example, Table 1-1 is a first dynamic information set classification table according to an embodiment of this application. As shown in Table 1-1, the first dynamic set classification table includes five preset set categories: a set category A1 to a set category A5, and types of dynamic information that is set to be included in a dynamic information set of each set category. For example, a dynamic information set of the set category A1 is set to include dynamic information of six types: traffic congestion information, traffic control information, road construction information, weather information, road water accumulation information, and road snow accumulation information. A dynamic information set of the set category A2 is set to include dynamic information of seven types: traffic congestion information, traffic control information, road construction information, weather information, road water accumulation information, road snow accumulation information, and variable speed limit information. For types of dynamic information that is set to be included in a dynamic information set of another set category, refer to descriptions in Table 1-1, and details are not described herein. In an actual application, dynamic information sets of different set categories may include dynamic information of completely different types, or may include dynamic information of partially identical types. This is not specifically limited in this application. It should be further understood that Table 1-1 is merely an example. In a specific implementation, types of the dynamic information included in the dynamic information sets of the different set categories may be set based on a specific requirement. This is not specifically limited in this application. Herein, because the types of the dynamic information that is set to be included in the dynamic information sets of the different set categories are different, the service device may subsequently push, based on the different set categories, dynamic information used by the terminal device to the terminal device.

**Table 1-1 First dynamic information set classification table**

| Set category | Types of dynamic information that is set to be included |
|---|---|
| A1 | Traffic congestion information, traffic control information, road construction information, weather information, road water accumulation information, and road snow accumulation information |
| A2 | Traffic congestion information, traffic control information, road construction information, weather information, road water accumulation information, road snow accumulation information, and variable speed limit information |
| A3 | Traffic congestion information, traffic control information, road construction information, weather information, road water accumulation information, road snow accumulation information, variable speed limit information, and variable lane information |
| A4 | Traffic congestion information, traffic control information, road construction information, weather information, road water accumulation information, road snow accumulation information, variable speed limit information, variable lane information, road damage information, abnormal manhole cover information, road abandoned object information, and traffic light status information |
| A5 | Traffic congestion information, traffic control information, road construction information, weather information, road water accumulation information, road snow accumulation information, variable speed limit information, variable lane information, road damage information, abnormal manhole cover information, road abandoned object information, traffic light status information, and location information of other traffic participants |

The following describes, with reference to the foregoing set category classification rule in this implementation, in detail a process in which the service device determines the target set category.

In a first optional specific implementation, after determining that one or more pieces of dynamic information need to be pushed to the terminal device, the service device may obtain an autonomous driving level or a device sensing capability level of the terminal device, and determine the autonomous driving level or the device sensing capability level of the terminal device as the target category indication information corresponding to the terminal device. It should be noted herein that, in an actual application, the autonomous driving capability of the terminal device is classified into a plurality of autonomous driving levels from pure manual driving to fully autonomous driving, and the autonomous driving level indicates a size of the autonomous driving capability of the terminal device. For example, the American Society of Automotive Engineers (society of automotive engineers, SAE) has classified driving into six levels (including L0, L1, L2, L3, L4, and L5) from pure manual driving to fully autonomous driving. L0 is level-0 autonomous driving. At this level, a driver performs all operation tasks, for example, steering, braking, acceleration, or deceleration. At the L1 level, the terminal device may implement some simple functions to assist the driver in completing a driving task. At the L2 level, the terminal device has implemented partial autonomous driving. At the L3 level, the terminal device has implemented conditional autonomous driving. At the L4 level, the terminal device has implemented highly autonomous driving. At the L5 level, the terminal device has implemented fully autonomous driving. In addition, different configurations of a sensor of the terminal device also cause different capabilities, of detecting or obtaining external information (such as environment image information of the terminal device or external environment temperature information), of the terminal device. Therefore, in an actual application, device sensing capability levels of the terminal device may also be classified based on a configuration degree of the sensor of the terminal device. For example, the device sensing capability levels of the terminal device may include three levels: strong, medium, and weak.

For example, the service device may first obtain delivery configuration information of the terminal device, extract the autonomous driving level or the device sensing capability level of the terminal device from the delivery configuration information, and then determine the autonomous driving level or the device sensing capability level of the terminal device as the target category indication information corresponding to the terminal device. Certainly, the service device may alternatively obtain, in another manner, the target category indication information corresponding to the terminal device. This is not specifically limited in this application.

Further, after obtaining the target category indication information, the service device may determine the target set category from one or more preset set categories based on the target category indication information. Specifically, when the target category indication information is the autonomous driving level of the terminal device, the service device may obtain a preset first relationship indication set, where the first relationship indication set includes a plurality of preset autonomous driving levels and a set category corresponding to each autonomous driving level. For example, Table 1-2 is a first relationship indication set according to an embodiment of this application. As shown in Table 1-2, autonomous driving levels L0, L1, L2, L3, and L4 respectively correspond to a set category A1, a set category A2, a set category A3, a set category A4, and a set category A5. Further, the service device may determine, from the first relationship indication set based on the autonomous driving level that is of the terminal device and that is currently obtained by the service device, a set category corresponding to the autonomous driving level of the terminal device, and determine the set category as the target set category. For example, assuming that the autonomous driving level of the terminal device is L0, the service device may determine the set category A1 as the target set category. It may be understood herein that, with reference to the foregoing descriptions of the types of the dynamic information in the dynamic information sets of the set category A1, the set category A2, the set category A3, the set category A4, and the set category A5, it can be learned that a lower autonomous driving level indicates fewer types of dynamic information included in a dynamic information set of a set category corresponding to the autonomous driving level. Because a terminal device with a low autonomous driving level may not be able to effectively use some dynamic information, the terminal device has no corresponding requirement on the dynamic information. Therefore, subsequently, the service device can be prevented, based on the target set category, from pushing some redundant dynamic information to the terminal device with the low autonomous driving level, so that communication resources and data processing resources can be saved.

**Table 1-2 First relationship indication set**

| Autonomous driving level | L0 | L1 | L2 | L3 | L4 |
|---|---|---|---|---|---|
| Set category | A1 | A2 | A3 | A4 | A5 |

When the target category indication information is the device sensing capability level of the terminal device, the service device may obtain a preset second relationship indication set, where the second relationship indication set includes a plurality of preset device sensing capability levels and a set category corresponding to each device sensing capability level. For example, Table 1-3 is a second relationship indication set according to an embodiment of this application. As shown in the table, any specific device sensing capability level uniquely corresponds to a set category. When the device sensing capability level is strong, the corresponding set category is A1. When the device sensing capability level is medium, the corresponding set category is category A2. When the device sensing capability level is weak, the corresponding set category is category A3. Then, the service device may determine, from the second relationship indication set based on the device sensing capability level that is of the terminal device and that is currently obtained by the service device, a set category corresponding to the device sensing capability level, and determine the set category as the target set category. For example, assuming that the device sensing capability level of the terminal device is medium, the service device may determine the set category A2 as the target set category. It may be understood herein that, with reference to the foregoing descriptions of the types of the dynamic information in the dynamic information sets of the set category A1, the set category A2, and the set category A3, it can be learned that a higher device sensing capability level indicates fewer types of dynamic information included in a dynamic information set of a set category corresponding to the device sensing capability level. Because a terminal device with a high device sensing capability level can sense or detect rich dynamic information, the terminal device does not need the service device to push too much dynamic information to the terminal device. Therefore, subsequently, the service device can be prevented, based on the target set category, from pushing redundant dynamic information to the terminal device with a low autonomous driving level, so that communication resources and data processing resources can be saved.

**Table 1-3 Second relationship indication** set

| Device sensing capability level | Strong | Medium | Weak |
|---|---|---|---|
| Set category | A1 | A2 | A3 |

Herein, the target category indication information is determined based on the autonomous driving level or the device sensing capability level of the terminal device. The method is simple and easy to implement, and can improve generation efficiency of the target dynamic information set.

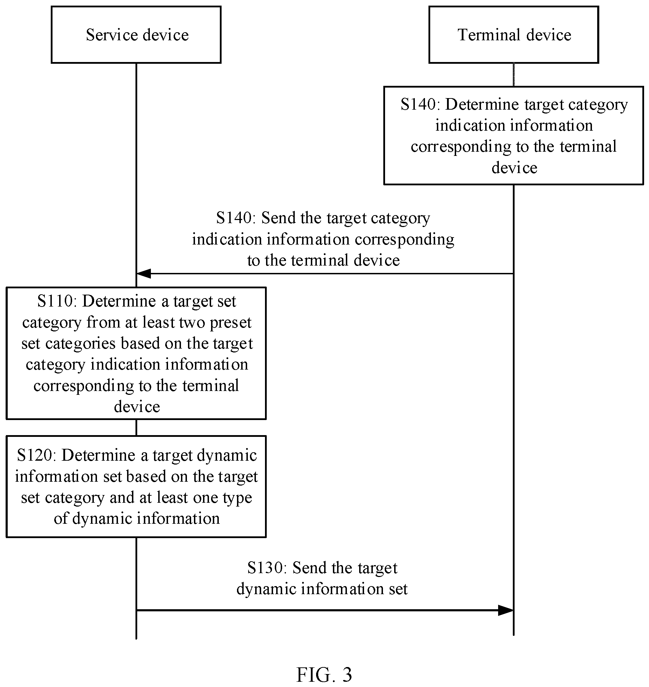

In a second optional specific implementation, FIG. 3 is another schematic flowchart of a traffic-related dynamic information processing method according to an embodiment of this application. As shown in FIG. 3, before step S 110, the processing method further includes the following steps.

S140: The terminal device determines and sends, to the service device, the target category indication information corresponding to the terminal device.

In some feasible implementations, the target category indication information corresponding to the terminal device may be determined by the terminal device based on an autonomous driving level or a device sensing capability level of the terminal device and sent to the service device. Herein, because processes in which the terminal device determines the target category indication information based on the autonomous driving level or based on the device sensing capability level are similar, the following uses the autonomous driving level as an example to describe a process in which the terminal device determines the target category indication information and sends the target category indication information to the service device.

Specifically, the terminal device may extract the autonomous driving level of the terminal device from configuration information of the terminal device, and then obtain a preset third relationship indication set. The third relationship indication set includes at least one autonomous driving level and category indication information corresponding to each autonomous driving level. Then, the terminal device may determine, from the third relationship indication set, category indication information corresponding to the autonomous driving level of the terminal device, and determine the category indication information as the target category indication information. For example, Table 1-4 is a third relationship indication set according to an embodiment of this application. The third relationship indication set includes autonomous driving levels L0 to L6 and corresponding category indication information S0 to S6. It is assumed that the terminal device determines that the autonomous driving level of the terminal device is L2, and the terminal device may learn, according to Table 1-4, that the autonomous driving level L2 corresponds to the category indication information S2. In this case, the terminal device may determine the category indication information S2 as the target category indication information corresponding to the terminal device.

**Table 1-4 Third relationship indication set**

| Autonomous driving level | L0 | L1 | L2 | L3 | L4 | L5 |
|---|---|---|---|---|---|---|
| Category indication information | S0 | S1 | S2 | S3 | S4 | S5 |

Then, the terminal device sends the target category indication information to the service device through a network. After receiving the target category indication information, the service device may determine the target set category from the at least two preset set categories based on the target category indication information. Specifically, after obtaining the target category indication information from the terminal device, the service device may obtain a preset fourth relationship indication set. The fourth relationship indication set includes at least one piece of category indication information and a set category corresponding to each piece of category indication information. Then, the service device may find, from the fourth relationship indication set, a set category corresponding to the target category indication information, and determine the set category as the target set category. For example, Table 1-5 is a fourth relationship indication set according to an embodiment of this application. As shown in Table 1-5, the fourth relationship indication set includes six pieces of category indication information in total from the category indication information S0 to the category indication information S5, and six set categories that are in one-to-one correspondence with the six pieces of category indication information and that include a set category A1 to a set category A6. When determining that the received target category indication information is the category indication information S2, the service device may determine that the category 3 corresponding to the category indication information S2 is the target set category. Herein, the terminal device determines the target category indication information and notifies the service device of the target category indication information, so that a data processing amount of the service device can be reduced, and generation efficiency of the target dynamic information set can be improved.

**Table 1-5 Fourth relationship indication set**

| Category indication information | S0 | S1 | S2 | S3 | S4 | S5 |
|---|---|---|---|---|---|---|
| Set category | A1 | A2 | A3 | A4 | A5 | A6 |

In this implementation, the dynamic information sets of the different set categories are distinguished based on the types of the dynamic information included in the dynamic information sets. Therefore, content included in the dynamic information sets can be refined, so that the service device can subsequently accurately obtain, through screening for the terminal device based on the obtained target set category, content of dynamic information used by the terminal device, and send the content to the terminal device based on the target dynamic information set. In this way, content of dynamic information that is not used may be not transmitted between the service device and the terminal device, thereby saving the communication resources and the data processing resources of the service device and the terminal device.

Implementation 2

In this implementation, each piece of dynamic information may specifically include one or more different dynamic attributes. A set category classification rule is as follows: If types of dynamic attributes in same dynamic information included in dynamic information sets are different, set categories are different. Specifically, the different set categories of the dynamic information sets are distinguished based on the types of the dynamic attributes included in the dynamic information. For ease of understanding, in this implementation, types of dynamic information included in the dynamic information sets of the different set categories are all the same. The following uses dynamic information such as road water accumulation information as an example. Table 1-6 is another dynamic information set classification table according to an embodiment of this application. As shown in Table 1-6, there are three preset set categories: a set category D 1, a set category D2, and a set category D3, and a dynamic information set of each set category includes the dynamic information such as the road water accumulation information. The road water accumulation information is further classified into a plurality of attribute levels based on attribute types included in the road water accumulation information, and the attribute levels are three levels: an attribute level B1, an attribute level B2, and an attribute level B3. Each different attribute level corresponds to a different set category. To be specific, a category of a dynamic information set including road water accumulation information at the attribute level B1 is the set category D1, a category of a dynamic information set including road water accumulation information at the attribute level B2 is the set category D2, and a category of a dynamic information set including road water accumulation information at the attribute level B3 is the set category D3.

In a specific implementation, the road water accumulation information at the attribute level B1 may specifically include the following dynamic attributes: an attribute level identifier, update frequency, a point location identifier, point location information, and surface location information. The attribute level identifier indicates the current attribute level of the road water accumulation information, that is, B1. The update frequency is frequency at which the service device updates content of the dynamic information such as the road water accumulation information. The point location identifier indicates whether a reference point included in the current road water accumulation information is a lowest point of a current road surface (a lowest point of the road surface is used for description below as a replacement) or another point (for example, a detected vehicle fire extinguishing point) other than the lowest point of the road surface. The point location information is location information of the reference point, and may be specifically world coordinates or relative coordinates. This is not specifically limited in this application. The surface location information mainly indicates a location of a water accumulation area, and may be specifically world coordinates or relative coordinates of a geometric point of a water accumulation surface of the water accumulation area. The road water accumulation information at the attribute level B2 may specifically include the following dynamic attributes: an attribute level identifier, update frequency, a point location identifier, point location information, surface location information, water depth information, water depth information update time, and water accumulation occurrence time. For descriptions of the attribute level identifier, the update frequency, the point location identifier, the point location information, and the surface location information, refer to the foregoing descriptions. The water depth information is a latest water accumulation depth that is of a water accumulation area and that is obtained through monitoring. The water depth information update time is latest update time of the water depth information. The water accumulation occurrence time is a moment at which water accumulation starts to occur in the water accumulation area. The road water accumulation information at the attribute level B3 may specifically include the following dynamic attributes: an attribute level identifier, update frequency, a point location identifier, point location information, surface location information, water depth information, water depth information update time, water accumulation occurrence time, a water depth change rate, and a water depth change acceleration rate. For descriptions of the dynamic attributes such as the attribute level identifier, the update frequency, the point location identifier, the point location information, the surface location information, the water depth information, the water depth information update time, and the water accumulation occurrence time, refer to the foregoing descriptions. The water depth change rate is a change rate that is of a water accumulation depth and that is determined based on a plurality of historical water accumulation depths and water accumulation duration. The water depth change acceleration rate is a parameter that is determined based on factors such as a current water depth change rate and a current rainfall amount and that indicates a change degree of the water depth change rate. Optionally, the water depth information corresponding to the attribute level B3 may be alternatively converted into a water depth danger level, and the water depth change rate and the water depth change acceleration rate may be alternatively converted into a predicted water depth danger level. In other words, the road water accumulation information at the attribute level B3 may alternatively specifically include an attribute level identifier, update frequency, a point location identifier, point location information, surface location information, a water depth danger level, a predicted water depth danger level, and water depth information update time. For descriptions of the attribute level identifier, the update frequency, the point location identifier, the point location information, the surface location information, and the water depth information update time, refer to the foregoing descriptions. The water depth danger level is obtained by quantizing a water accumulation depth at a current moment according to a preset quantization rule, and different water depth danger levels correspondingly indicate different danger degrees. For example, it is preset that different water depth danger levels correspond to different water accumulation depth ranges. If the water accumulation depth at the current moment is included in a water accumulation depth range, a water depth danger level corresponding to the water accumulation depth range is a water depth danger level at the current moment. The predicted water depth danger level is obtained by quantizing, according to the preset quantization rule, a water accumulation depth predicted based on the water depth change rate and the water depth change acceleration rate. For example, it is assumed that a current moment is t1, and a prediction moment is t2. If water depth information corresponding to the moment t1 is d1, the water depth change rate is v1, and the water depth change acceleration rate is a1, water depth information d2 corresponding to the moment t2 may be determined according to the following relational expression (1):

$$d2 = v1 \times (t2 - t1) + \frac{1}{2} \times a1 \times (t2 - t1)^2$$

After determining the water depth information d2 corresponding to the moment t2, the service device may quantize the water depth information d2 according to the preset quantization rule, to obtain a predicted water depth danger level corresponding to the moment t2.

Herein, it should be understood that the descriptions of the attribute levels of the road water accumulation information in Table 1-6 are merely an example. In a specific implementation, types of dynamic attributes included in road water accumulation information at different attribute levels may be set based on an actual requirement. In addition, for dynamic information other than the road water accumulation information, attribute levels of dynamic attributes in the dynamic information may be set based on an actual requirement. Repeated descriptions are not provided in this application.

**Table 1-6 Another dynamic information set classification table**

| Set category | Attribute level of the road water accumulation information | Types of the dynamic attributes included in the road water accumulation information |
|---|---|---|
| D1 | B1 | Attribute level identifier, update frequency, point location identifier, point location information, and surface location information |
| D2 | B2 | Attribute level identifier, update frequency, point location identifier, point location information, surface location information, water depth information, water depth information update time, and water accumulation occurrence time |
| D3 | B3 | Attribute level identifier, update frequency, point location identifier, point location information, surface location information, water depth information, water depth information update time, water accumulation occurrence time, water depth change rate, and water depth change acceleration rate |

Optionally, the attribute such as the update frequency may include a plurality of different values, and the service device may dynamically adjust the value of the update frequency based on a weather condition of an area in which the service device is located. For example, it is assumed that the values of the update frequency include 30 seconds/time, 30 minutes/time, 3 hours/time, and 24 hours/time. When the weather status of the area in which the service device is located is heavy rain to a rainstorm, the service device may determine that the value of the update frequency is 30 seconds/time, in other words, the service device updates content of the road water accumulation information every 30 seconds. When the weather status of the area in which the service device is located is moderate rain, the server may determine that the value of the update frequency is 30 minutes/time. In other words, the service device updates content of the road water accumulation information every 30 minutes. When the weather status of the area in which the service device is located is light rain, the service device may determine that the value of the update frequency is 3 hours/time, in other words, the server updates content of the road water accumulation information every 3 hours. When the weather status of the area in which the service device is located is no rain, the service device may determine that the value of the update frequency is 24 hours/time, in other words, the service device updates content of the road water accumulation information every 24 hours. It should be understood herein that the foregoing descriptions of the value of the update frequency of the road water accumulation information are an example, and the value of the update frequency may be determined based on an actual application situation. This is not limited in this application.

The following describes, with reference to the foregoing set category classification rule, in detail the process in which the service device determines the target set category.

In a first optional specific implementation, after determining that one or more pieces of dynamic information need to be pushed to the terminal device, the service device may obtain weather status information of an area in which the terminal device is located, and determine the weather status information as the target category indication information corresponding to the terminal device. It should be noted herein that the weather status information of the area in which the terminal device is located may be specifically a real-time weather condition that is really measured at a location of the terminal device, for example, heavy rain or rainstorm, or may be a local geographical climate condition, for example, a dry area or a rainforest area. Then, the service device may determine, from the at least two preset set categories based on the target category indication information, the target set category corresponding to the target category indication information. In the following, an example in which the weather status information is the real-time weather condition that is really measured at the location of the terminal device is used. Specifically, after obtaining the weather condition that is really measured at the location of the terminal device, the service device may further obtain a preset fifth relationship indication set. Herein, the fifth relationship indication set includes a plurality of weather conditions and a set category corresponding to each weather condition. For example, Table 1-7 is a fifth relationship indication set according to this application. The fifth relationship indication set includes three weather conditions: light rain, moderate rain, and heavy rain to a rainstorm, and an attribute level B 1, an attribute level B2, and an attribute level B3 that respectively correspond to the three weather conditions. Herein, when light rain occurs in the area in which the terminal device is located, it is difficult to form a deep water accumulation area. Therefore, the terminal device only needs to pay attention to location information of a water accumulation area. Therefore, the weather condition such as light rain corresponds to the attribute level B1 and corresponds to the set category D1. When moderate rain occurs in the area in which the terminal device is located, a water accumulation area that affects the terminal device may appear. However, because a change speed of a water accumulation depth is generally slow in moderate rain, the terminal device only needs to pay attention to location and depth information of the water accumulation area in this case. Therefore, the weather condition such as moderate rain corresponds to the attribute level B2 and corresponds to the set category D2. When heavy rain to a rainstorm occurs in the area in which the terminal device is located, a water accumulation area with a large water accumulation depth is easily formed, and the water accumulation depth changes rapidly. Therefore, the terminal device not only needs to pay attention to location and depth information of the water accumulation area, but also needs to pay attention to a change speed of the water accumulation depth and change acceleration information of the water accumulation depth, to predict a water accumulation depth and an area of the water accumulation area in a future short period of time. Therefore, the weather condition such as heavy rain to a rainstorm corresponds to the attribute level B3 and corresponds to the set category D3. Further, after obtaining the fifth relationship indication set, the service device may find a set category corresponding to the weather condition that is really measured at the location of the terminal device, and determine the set category as the target set category. For example, assuming that the service device determines that the weather condition that is really measured at the location of the terminal device is moderate rain, the service device may determine that the attribute level of the road water accumulation information is B2, and may further determine that the target set category is the set category D2.

**Table 1-7 Fifth relationship indication set**

| Weather condition | Light rain | Moderate rain | Heavy rain to a rainstorm |
|---|---|---|---|
| Attribute level of the road water accumulation information | B1 | B2 | B3 |

(continued)

| Weather condition | Light rain | Moderate rain | Heavy rain to a rainstorm |
|---|---|---|---|
| Set category | D1 | D2 | D3 |

In a second optional specific implementation, similar to the descriptions in the second optional specific implementation in the foregoing Implementation 1, the terminal device may first determine the target category indication information based on weather status information of an area in which the terminal device is located, and send the target category indication information to the service device. Then, the service device further determines the target set category based on the target category indication information. In this case, different weather status information corresponds to different identifiers, and the different identifiers herein are different category indication information. An identifier determined by the terminal device based on the weather status information of the area in which the terminal device is located is the target category indication information. Herein, for a specific process in which the terminal device determines the target category indication information and sends the target category indication information to the service device, refer to the process in which the terminal device determines the target category indication information described in the second optional specific implementation in Implementation 1. An only difference is that the terminal device uses the weather condition really measured in the area in which the terminal device is located instead of an autonomous driving level or a device sensing capability level. For a specific process, refer to the foregoing descriptions. Details are not described herein again. Similarly, herein, the terminal device determines the target category indication information and notifies the service device of the target category indication information, so that a data processing amount of the service device can also be reduced, and generation efficiency of the target dynamic information set can be improved.

In this implementation, the dynamic information sets of the different set categories are distinguished based on different attribute levels of the one or more pieces of dynamic information in the dynamic information sets. Therefore, the types of the dynamic information sets are refined, so that the service device can subsequently accurately push, to the terminal device based on the obtained target set category, content of dynamic information used by the terminal device. In this way, content of dynamic information that is not used may be accurately not transmitted between the service device and the terminal device, thereby saving communication resources and data processing resources of the service device and the terminal device.

Implementation 3

In this implementation, each dynamic attribute further corresponds to a plurality of different preset attribute granularities. A set category classification rule is as follows: If attribute granularities of dynamic attributes that are of a same type and that are in same dynamic information included in dynamic information sets are different, set categories are different. Herein, the attribute granularity of the dynamic attribute is a parameter that indicates value precision of the dynamic attribute, for example, a unit of a value of the dynamic attribute. In other words, in this implementation, set categories of dynamic information sets are distinguished based on attribute granularities of a dynamic attribute included in one piece of dynamic information. For ease of understanding, in this implementation, it is assumed that types of dynamic information included in the dynamic information sets of the different set categories are all the same, and types of dynamic attributes included in the dynamic information that is of the same type of and that is in the dynamic information sets of the different set categories are also the same. The following uses a dynamic attribute such as water depth information in dynamic information such as road water accumulation information as an example. Table 1-8 is still another dynamic information set classification table according to an embodiment of this application. As shown in Table 1-8, attribute granularities of the dynamic attribute such as the depth information in the road water accumulation information may specifically include an attribute granularity C1 (which is assumed to be a meter herein), an attribute granularity C2 (which is assumed to be a decimeter herein), an attribute granularity C3 (which is assumed to be a centimeter herein), and an attribute granularity C4 (which is assumed to be a millimeter herein), and each different attribute granularity corresponds to a different set category. For example, an attribute granularity of water depth information of road water accumulation information included in a dynamic information set of a set category E1 is C1. An attribute granularity of water depth information of road water accumulation information included in a dynamic information set of a set category E2 is C2. An attribute granularity of water depth information of road water accumulation information included in a dynamic information set of a set category E3 is C3. An attribute granularity of water depth information of road water accumulation information included in a dynamic information set of a set category E4 is C4. That is, value precision of water depth information included in the dynamic information sets of the different set categories is different. It should be understood herein that, the descriptions of the attribute granularities of the dynamic attribute such as the water depth information in Table 1-8 are merely an example, and do not have a limitation effect.

**Table 1-8 Still another dynamic information set classification table**

| Attribute granularity of the water depth information | C1 (meter) | C2 (decimeter) | C3 (centimeter) | C4 (millimeter) |
|---|---|---|---|---|
| Set category | E1 | E2 | E3 | E4 |

The following describes, with reference to the foregoing set category classification rule, the process in which the service device determines the target set category.

In a first optional specific implementation, after determining that one or more pieces of dynamic information need to be pushed to the terminal device, the service device may obtain a tariff level corresponding to the terminal device, and determine the tariff level corresponding to the terminal device as the target category indication information. It should be noted herein that, in an actual application, tariff levels of the terminal device are classified based on a quantity of service fees paid by the terminal device. A larger quantity of service fees paid by the terminal device indicates a higher tariff level of the terminal device. Then, the service device may determine, from the at least two preset set categories based on the target category indication information, the target set category corresponding to the target category indication information. Specifically, after obtaining the tariff level of the terminal device, the service device may further obtain a preset sixth relationship indication set. The sixth relationship indication set includes a plurality of different tariff levels, an attribute granularity of water depth information corresponding to each tariff level, and a set category of a dynamic information set that includes the water depth information at the attribute granularity. For example, Table 1-9 is a sixth relationship indication set according to this application. As shown in Table 1-9, the sixth relationship indication set includes four tariff levels: a tariff level Z 1, a tariff level Z2, a tariff level Z3, and a tariff level Z4, and an attribute granularity and a set category of water depth information corresponding to each tariff level. Herein, the tariff level increases from Z 1 to Z4 level by level. In an actual application, a higher tariff level of the terminal device indicates a higher service fee paid by the terminal device, and higher precision of water depth information that can be provided by the service device. Therefore, when the tariff level corresponding to the terminal device is Z 1, the attribute granularity of the water depth information corresponding to the tariff level is a meter. When the tariff level corresponding to the terminal device is Z2, the attribute granularity of the water depth information corresponding to the tariff level is a decimeter. When the tariff level corresponding to the terminal device is Z3, the attribute granularity of the water depth information corresponding to the tariff level is a millimeter. When the tariff level corresponding to the terminal device is Z4, the attribute granularity of the water depth information corresponding to the tariff level is a millimeter. Further, after obtaining the sixth relationship indication set, the service device may find a corresponding attribute granularity and set category from the sixth relationship indication set based on the target category indication information (namely, the tariff level) of the terminal device, and determine the found set category as the target set category. For example, assuming that the service device determines that the tariff level of the terminal device is Z2, the service device may determine that the attribute granularity of the water depth information corresponding to the tariff level is C2, and then may determine the set category E2 as the target set category.

**Table 1-9 Sixth relationship indication set**

| Tariff level | Z1 | Z2 | Z3 | Z4 |
|---|---|---|---|---|
| Attribute granularity of the water depth information | C1 (meter) | C2 (decimeter) | C3 (centimeter) | C4 (millimeter) |
| Set category | E1 | E2 | E3 | E4 |

In a second optional specific implementation, similar to the descriptions in the second optional specific implementation in the foregoing Implementation 1, the terminal device may first determine the target category indication information based on a tariff level of the terminal device, and send the target category indication information to the service device. Then, the service device further determines the target set category based on the target category indication information. In this case, different tariff levels correspond to different identifiers, and the different identifiers herein are different category indication information. An identifier determined by the terminal device based on the tariff level of the terminal device is the target category indication information. Herein, for a specific process in which the terminal device determines the target category indication information and sends the target category indication information to the service device, refer to the process in which the terminal device determines the target category indication information described in the second optional specific implementation in Implementation 1. An only difference is that the terminal device uses the tariff level of the terminal device instead of an autonomous driving level or a device sensing capability level. For a specific process, refer to the foregoing descriptions. Details are not described herein again. Similarly, herein, the terminal device determines the target category indication information and notifies the service device of the target category indication information, so that a data processing amount of the service device can also be reduced, and generation efficiency of the target dynamic information set can be improved.

In this implementation, the dynamic information sets of the different set categories are distinguished based on the different attribute granularities of the dynamic attribute included in the dynamic information in the dynamic information sets. Therefore, the types of the dynamic information sets are more refined, so that the service device can subsequently more accurately push, to the terminal device based on the obtained target set category, content of dynamic information used by the terminal device. In this way, content of dynamic information that is not used is more accurately not transmitted between the service device and the terminal device, thereby saving communication resources and data processing resources of the service device and the terminal device.

Implementation 4

In this implementation, the plurality of set category classification rules described in Implementation 1, Implementation 2, and Implementation 3 may be combined, to implement more refined classification of categories of dynamic information sets. In other words, the categories of the dynamic information sets may be classified in at least two of three dimensions: types of dynamic information included in the dynamic information sets, types of dynamic attributes included in the dynamic information, and attribute granularities of the dynamic attribute in the dynamic information. In this case, the set categories of the dynamic information sets finally obtained through classification are actually different combinations of the set categories obtained through classification in the foregoing three implementations. For example, it is assumed that the categories of the dynamic information sets are classified according to both the classification rules described in Implementation 1 and Implementation 2. In this case, the set categories finally obtained through classification may be a set category (A1, D1), a set category (A1, D2), a set category (A2, D1), and the like. For types of dynamic information included in dynamic information sets of different set categories and types of dynamic attributes included in each piece of dynamic information, synchronously refer to descriptions in the foregoing Implementation 1 and Implementation 2. For example, it is assumed that a set category of a dynamic information set X1 is (A1, D1). In this case, types of dynamic information included in the dynamic information set X1 are the types that are of the dynamic information corresponding to the set category A1 and that are described in Table 1-1, and types of dynamic attributes included in road water accumulation information are the types that are of the dynamic attributes corresponding to the set category D1 and that are described in Table 1-6.

Herein, because combination implementations of classification rules in different dimensions are similar, the following describes in detail classification of the set categories of the dynamic information sets in two dimensions: the types of the dynamic information included in the dynamic information sets and attribute levels of the dynamic information. For example, Table 1-10 is yet another dynamic information set classification table according to this application. As shown in Table 1-10, four set categories are preset: the set category (A1, D1), the set category (A1, D2), the set category (A2, D1), and a set category (A2, D2). Types of dynamic information and/or types of dynamic attributes in dynamic information included in dynamic information sets of different set categories are different. For example, assuming that a category of a dynamic information set X2 is the set category (A1, D1), the dynamic information set X2 may include several types of dynamic information, such as traffic congestion information, traffic control information, road construction information, weather information, and road water accumulation information. Dynamic attributes included in the road water accumulation information may be an attribute level identifier, update frequency, a point location identifier, point location information, and surface location information. Similarly, assuming that a category of a dynamic information set X3 is the set category (A2, D2), the dynamic information set X3 may include several types of dynamic information such as traffic congestion information, traffic control information, road construction information, weather information, road water accumulation information, road snow accumulation information, and variable speed limit information. Dynamic attributes included in the road water accumulation information are an attribute level identifier, update frequency, a point location identifier, point location information, surface location information, water depth information, water depth information update time, and water accumulation occurrence time. Herein, for descriptions of the foregoing dynamic information and the dynamic attributes in the dynamic information, refer to the foregoing descriptions. Details are not described herein again.

**Table 1-10 Still another dynamic information set classification table**

| Set category | Types of the dynamic information included in the dynamic information sets | Types of the dynamic attributes included in the road water accumulation information |
|---|---|---|
| (A1, D1) | Traffic congestion information, traffic control information, road construction information, weather information, and road water accumulation information | Attribute level identifier, update frequency, point location identifier, point location information, and surface location information |
| (A1, D2) | Traffic congestion information, traffic control information, road construction information, weather information, and road water accumulation information | Attribute level identifier, update frequency, point location identifier, point location information, surface location information, water depth information, water depth information update time, and water accumulation occurrence time |
| (A2, D1) | Traffic congestion information, traffic control information, road construction information, weather information, road water | Attribute level identifier, update frequency, point location identifier, point |
| | accumulation information, road snow accumulation information, and variable speed limit information | location information, and surface location information |
| (A2, D2) | Traffic congestion information, traffic control information, road construction information, weather information, road water accumulation information, road snow accumulation information, and variable speed limit information | Attribute level identifier, update frequency, point location identifier, point location information, surface location information, water depth information, water depth information update time, and water accumulation occurrence time |

The following describes a process in which the service device determines the target set category, with reference to the foregoing set classification rules and by using an example of a scenario in which set classification is performed in the two dimensions: the types of the dynamic information included in the dynamic information sets and the attribute levels of the dynamic information. It should be noted herein that, because the set categories described in this implementation are a combination of any two or three of the set category in the foregoing Implementation 1, the set category in Implementation 2, and the set category in Implementation 3, to facilitate distinguishing between the set category defined in this implementation and the set category defined in the foregoing Implementation 1, the set category defined in Implementation 2, and the set category defined in Implementation 3, the following uses a first subset category, a second subset category, and a third subset category for description below as replacements of the set category defined in the foregoing Implementation 1, the set category defined in the foregoing Implementation 2, and the set category defined in the foregoing Implementation 3.

In a specific implementation, after determining that one or more pieces of dynamic information need to be pushed to the terminal device, the service device may determine, by using the method described in Implementation 1, a target first subset category corresponding to the terminal device. For a specific process, refer to the process of determining the target set category described in Implementation 1. Details are not described herein again. The service device may further determine, by using the method described in Implementation 2, a target second subset category corresponding to the terminal device. For a specific process, refer to the process of determining the target set category described in the foregoing Implementation 2. Details are not described herein again. Then, the service device may combine the target first subset category and the target second subset category to obtain the target set category of the target dynamic information set used by the terminal device. For example, if the service device determines, by using the method described in Implementation 1, that the target first subset category is A1, and determines, by using the method described in Implementation 2, that the target second subset category is D1, the service device may determine that the target set category is (A1, D1). To be specific, the target dynamic information set used by the terminal device includes the dynamic information such as the traffic congestion information, the traffic control information, the road construction information, the weather information, and the road water accumulation information, and the types of the dynamic attributes included in the road water accumulation information are the attribute level identifier, the update frequency, the point location identifier, the point location information, and the surface location information.

In this implementation, the different set categories are distinguished in at least two different dimensions of the three dimensions: the types of the dynamic information included in the dynamic information sets, the types of the dynamic attributes included in the dynamic information, and the attribute granularities of the dynamic attribute in the dynamic information. This can further improve a refinement degree of content included in the dynamic information sets, so that the service device can subsequently more accurately push, to the terminal device based on the obtained target set category, content of dynamic information used by the terminal device. In this way, content of dynamic information that is not used is more accurately not transmitted between the service device and the terminal device.

S 120: The service device determines the target dynamic information set based on the target set category and at least one type of dynamic information.

In some feasible implementations, after obtaining the target set category, the service device may determine, based on the target category set, content of dynamic information (for ease of differentiation, target dynamic information is used for description below as a replacement) to be included in the target dynamic information set, and then extract the content of the target dynamic information from the at least one piece of dynamic information buffered by the service device, to generate the target dynamic information set.

Herein, for the foregoing Implementation 1, Implementation 2, Implementation 3, or Implementation 4, because processes in which the service device determines the target dynamic information set based on the target set category and the at least one type of dynamic information buffered by the service device are similar, the following describes, based on content of the foregoing Implementation 4, a process in which the service device determines the target dynamic information set by using an example.

Specifically, assuming that the target set category determined by the service device is the set category (A1, D1), the service device may determine, according to the classification rule shown in Table 1-8, that the target dynamic information included in the target dynamic information set is five types of dynamic information such as the traffic congestion information, the traffic control information, the road construction information, the weather information, and the road water accumulation information (for ease of differentiation, the dynamic information included in the target dynamic information set is described as the target dynamic information below). In addition, the service device determines that the dynamic attributes included in the road water accumulation information include the attribute level identifier, the update frequency, the point location identifier, the point location information, and the surface location information. Then, the service device may extract, from the at least one type of dynamic information buffered by the service device, content of dynamic attributes included in the five types of target dynamic information such as the traffic congestion information, the traffic control information, the road construction information, the weather information, and the road water accumulation information, and exclude content of a dynamic attribute in the road water accumulation information other than the attribute level identifier, the update frequency, the point location identifier, the point location information, and the surface location information, and finally obtain the target dynamic information set through combination.

S130: The service device sends the target dynamic information set to the terminal device.

In some feasible implementations, after determining the target dynamic information set, the service device may send the target dynamic information set to the terminal device through a wireless network.

Optionally, the service device may further generate a target category indication identifier corresponding to the target set category, and then send the target category indication identifier to the terminal device through a network. Herein, the target category indication identifier may be used by the terminal device to subsequently determine that a category of the target dynamic information set received by the terminal device is the target set category. In this way, the terminal device can easily and conveniently determine the target set category of the target dynamic information set, thereby reducing a data processing amount of the terminal device.

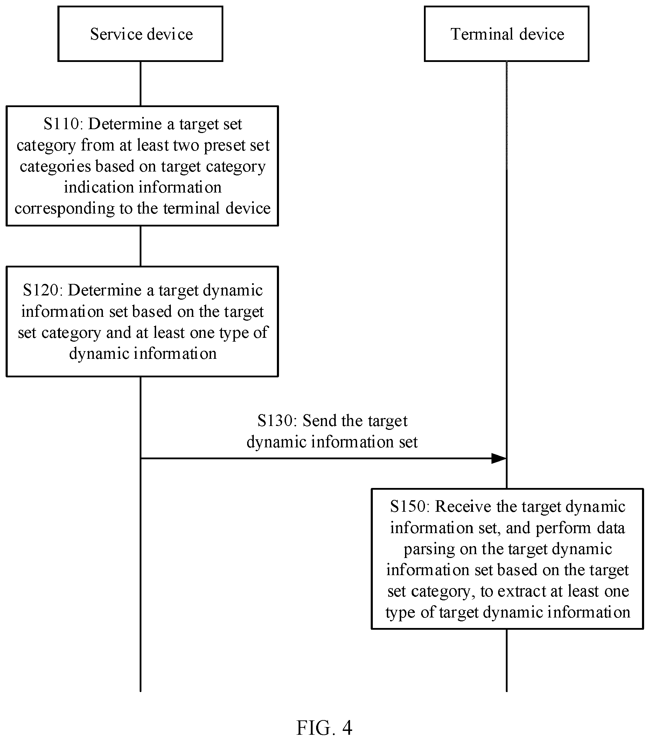

Further, FIG. 4 is still another schematic flowchart of a traffic-related dynamic information processing method according to an embodiment of this application. As shown in FIG. 4, the processing method further includes the following steps.

S 150: The terminal device receives the target dynamic information set, and performs data parsing on the target dynamic information set based on the target set category, to extract at least one type of target dynamic information included in the target dynamic information set.

In some feasible implementations, the terminal device may receive the target dynamic information set from the service device through the wireless network. Then, the terminal device may further obtain the target set category corresponding to the target dynamic information set. Then, the terminal device may perform data parsing on the target dynamic information set based on specific content included in the target dynamic information set indicated by the target set category, and finally obtain the at least one piece of target dynamic information included in the target dynamic information set.

In an optional implementation, based on content described in step S110, when the service device actively determines the target set category, the terminal device may receive the target category indication identifier from the service device, and then further determine a target category based on the target category indication identifier.

In a second optional implementation, based on content described in step S 110, when the terminal device actively determines the target set category and notifies the service device of the target set category, the terminal device may directly use the target set category previously determined by the terminal device.

Further optionally, after obtaining the at least one piece of target dynamic information, the terminal device may use one or more of the at least one piece of target dynamic information to perform route planning or city emergency processing.

For example, after obtaining the road water accumulation information included in the target dynamic information set, the terminal device may determine location information of the terminal device relative to a water accumulation area based on the attribute of the surface location information in the road water accumulation information and a high-precision point cloud map obtained by the terminal device. Then, if the terminal device determines that the water accumulation area is located on a given traveling route of the terminal device, and the terminal device is about to pass through the water accumulation area, the terminal device may determine, based on the dynamic attribute such as the water depth information and an allowed water wading depth of the terminal device, whether the terminal device can safely pass through the water accumulation area. If the terminal device determines that the terminal device cannot safely pass through the water accumulation area, the terminal device may pause and wait or replan a new path. Alternatively, if the terminal device determines that the water accumulation area is located on a given traveling route of the terminal device, and there is a specific distance between the water accumulation area and the terminal device, the terminal device may infer, based on the dynamic attribute such as the water depth change rate and estimated time for reaching the water accumulation area, water depth information that is of the water accumulation area and that exists when the terminal device reaches the water accumulation area. Then, if the terminal device determines that the water depth information that is of the water accumulation area and that exists when the terminal device reaches the water accumulation area is greater than or equal to the allowed water wading depth of the terminal device, the terminal device may take a detour in advance.

In this embodiment of this application, the dynamic information sets correspond to a plurality of different set categories, and content of dynamic information corresponding to different set categories is different. In a process of pushing the dynamic information set to the terminal device, the service device first determines, based on the target category indication information corresponding to the terminal device, a set category (namely, the target set category) of the dynamic information set used by the terminal device, then generates the target dynamic information set of the target set category, and pushes the target dynamic information set to the terminal device. In this way, all content of dynamic information included in the target dynamic information set meets a requirement of the terminal device, and the service device does not push some useless dynamic information to the terminal device, so that the communication resources and the data processing resources of the service device and the terminal device can be saved.

**Embodiment 2**

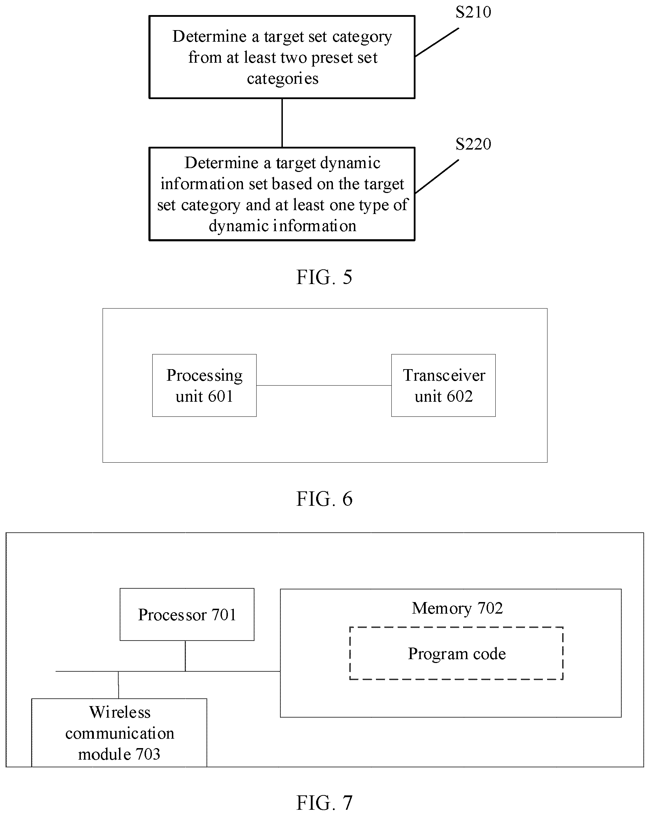

FIG. 5 is yet another schematic flowchart of a traffic-related dynamic information processing method according to an embodiment of this application. The method may be specifically performed by the terminal device and the service device in the communication system shown in FIG. 1. It can be learned from FIG. 5 that the processing method includes the following steps.

S210: The terminal device determines a target set category from at least two preset set categories.

In some feasible implementations, a plurality of set categories are preconfigured for the terminal device. These set categories are obtained through classification according to a preset set category classification rule, and content of dynamic information included in dynamic information sets of different set categories is different. When the terminal device determines that the terminal device needs to generate a dynamic information set, the terminal device may first determine, from the at least two set categories, a category of the dynamic information set that the terminal device needs to generate. This embodiment provides different set category classification rules. The following specifically describes, with reference to the plurality of set category classification rules provided in this embodiment, a process in which the terminal device determines the target set category.

Implementation 1

As described in Implementation 1 in step S110 in Embodiment 1, a preset set category classification rule is as follows: If types of dynamic information included in dynamic information sets are different, set categories are different. Herein, for specific descriptions of different set categories and a type of dynamic information included in a dynamic information set of each set category, refer to content described in Implementation 1 in step 5110 in Embodiment 1. Details are not described herein again. In this scenario, the terminal device may obtain an autonomous driving level or a device sensing capability level of the terminal device, and then determine, based on the autonomous driving level or the device sensing capability level of the terminal device, the target set category to which the terminal device is applicable. Herein, for a specific process in which the terminal device determines the target set category based on the autonomous driving level or the device sensing capability level, refer to the process in which the service device determines the target set category based on the autonomous driving level or the device sensing capability level described in Embodiment 1. Details are not described herein again.

In this implementation, the dynamic information sets of the different set categories are distinguished based on the types of the dynamic information included in the dynamic information sets. Therefore, content included in the dynamic information sets can be refined, so that the terminal device can subsequently obtain, through screening based on the obtained target set category, content of dynamic information used by the terminal device, thereby preventing the terminal device from processing some useless dynamic information, and saving data processing resources of the terminal device.

Implementation 2

As described in Implementation 2 in step S110 in Embodiment 1, a preset set category classification rule is as follows: If types of dynamic attributes in same dynamic information included in dynamic information sets are different, set categories are different. Similarly, for ease of understanding, in this implementation, types of dynamic information included in the dynamic information sets of the different set categories are all the same. Herein, for specific descriptions of different set categories and types of dynamic attributes in same dynamic information included in a dynamic information set of each set category, refer to content described in Implementation 2 in step 5110 in Embodiment 1. Details are not described herein again. In this scenario, the terminal device may obtain weather status information of an area in which the terminal device is located, and determine the target set category based on the weather status information. Herein, for a specific process in which the terminal device determines the target set category based on the weather status information, refer to the process in which the service device determines the target set category based on the weather status information described in Embodiment 1. Details are not described herein again.

In this implementation, the dynamic information sets of the different set categories are distinguished based on different attribute levels of one or more pieces of dynamic information in the dynamic information sets. Therefore, types of the dynamic information sets are refined, so that the terminal device can subsequently accurately obtain, through screening based on the obtained target set category, content of dynamic information used by the terminal device, thereby preventing the terminal device from processing some useless dynamic information, and saving data processing resources of the terminal device.

Implementation 3

As described in Implementation 3 in step S110 in Embodiment 1, a preset set category classification rule is as follows: Set categories of dynamic information sets are distinguished based on attribute granularities of a dynamic attribute included in one piece of dynamic information. For ease of understanding, in this implementation, it is assumed that types of dynamic information included in the dynamic information sets of the different set categories are all the same, and types of dynamic attributes included in the dynamic information that is of the same type of and that is in the dynamic information sets of the different set categories are also the same. Herein, for specific descriptions of different set categories and attribute granularities of a dynamic attribute in same dynamic information included in a dynamic information set of each set category, refer to content described in Implementation 3 in step 5110 in Embodiment 1. Details are not described herein again. In this scenario, the terminal device may obtain a tariff level corresponding to the terminal device, and determine the target set category based on the tariff level corresponding to the terminal device. Herein, for a specific process in which the terminal device determines the target set category based on the tariff level corresponding to the terminal device, refer to the process in which the service device determines the target set category based on the tariff level corresponding to the terminal device described in Embodiment 1. Details are not described herein again.

In this implementation, the dynamic information sets of the different set categories are distinguished based on different attribute granularities of one or more dynamic attributes in dynamic information in the dynamic information sets. Therefore, types of the dynamic information sets are more refined, so that the terminal device can subsequently more accurately obtain, through screening, content of dynamic information used by the terminal device, thereby preventing the terminal device from processing some useless dynamic information, and saving data processing resources of the terminal device.

Implementation 4

As described in Implementation 4 in step S110 in Embodiment 1, a preset set category classification rule is as follows: Categories of dynamic information sets are classified in at least two of three dimensions: types of dynamic information included in the dynamic information sets, types of dynamic attributes included in dynamic information, and attribute granularities of the dynamic attribute in dynamic information. In this case, the set categories of the dynamic information sets finally obtained through classification are actually different combinations of the set categories obtained through classification in the foregoing three optional implementations. Herein, for specific descriptions of the set category, refer to the descriptions of the set category in Implementation 4 in step 5110 in Embodiment 1. Details are not described herein again. In this case, the terminal device may first separately determine set categories corresponding to the target dynamic information set in the foregoing different dimensions (herein, for ease of differentiation, in this implementation, a first subset category, a second subset category, and a third subset category are used for description as replacements of the set categories separately determined in a single dimension). Herein, for a specific process in which the terminal device determines the corresponding subset category in any one of the three dimensions: the types of the dynamic information included in the dynamic information sets, the types of the dynamic attributes included in the dynamic information, and the attribute granularities of the dynamic attribute in the dynamic information, refer to the corresponding processes described in Implementation 1, Implementation 2, and Implementation 3. Details are not described herein again. Then, the terminal device may finally determine the target set category based on the determined subset categories. For a specific process, refer to the process in which the service device determines the target set category described in Implementation 4 in step 5110 in Embodiment 1. Details are not described herein again.

In this implementation, different set categories are distinguished in at least two different dimensions of the three dimensions: the types of the dynamic information included in the dynamic information sets, the types of the dynamic attributes included in the dynamic information, and the attribute granularities of the dynamic attribute in the dynamic information. This can further improve a refinement degree of content included in the dynamic information sets, so that the terminal device can subsequently more accurately obtain, through screening, content of dynamic information used by the terminal device, thereby preventing a processing process of some useless dynamic information and saving data processing resources of the terminal device.

S220: The terminal device determines the target dynamic information set based on the target set category and at least one type of dynamic information.

In some feasible implementations, after obtaining the target set category, the terminal device may determine, based on the target category set, content to be included in the target dynamic information set, and then extract, from the at least one piece of dynamic information buffered by the terminal device, the content to be included in the target dynamic information set, to generate the target dynamic information set. It should be noted herein that the at least one piece of dynamic information buffered by the terminal device may be from the foregoing service device or another terminal device. This is not limited herein. Herein, for a specific process in which the terminal device determines the target dynamic information set based on the target set category and the at least one type of dynamic information, refer to the process in which the service device determines the target dynamic information set based on the target set category and the at least one type of dynamic information described in step S120 in Embodiment 1. Details are not described herein again.

In this embodiment, the terminal device first determines, from a plurality of preset set categories, the target category set corresponding to the terminal device, and then obtains, from the at least one piece of dynamic information through screening based on the target category set, the dynamic information used by the terminal device, and generates the target dynamic information set. In this way, the terminal device can be prevented from further processing useless dynamic information received by the terminal device, so that the data processing resources of the terminal device can be saved.

FIG. 6 is a schematic diagram of a structure of an apparatus according to an embodiment of this application. The apparatus may be the server in Embodiment 1. As shown in FIG. 6, the apparatus includes:

a processing unit 601, configured to determine a target set category from at least two preset set categories based on target category indication information corresponding to a terminal device, where different category indication information corresponds to different set categories, content of dynamic information included in dynamic information sets of different set categories is different, and any dynamic information set includes one or more pieces of dynamic information. The processing unit 601 is further configured to determine a target dynamic information set based on the target set category and at least one type of dynamic information. The transceiver unit 602 is configured to send the target dynamic set to the terminal device.

In some possible implementations, the processing unit 601 is further configured to generate a target category indication identifier. The target category indication identifier is used by the terminal device to determine the target set category. The transceiver unit 602 is further configured to send the target category indication identifier to the terminal device.

In some possible implementations, types of the dynamic information included in the dynamic information sets of the different set categories are different.

In some possible implementations, the target category indication information includes an autonomous driving level or a device sensing capability level of the terminal device.

In some possible implementations, any piece of dynamic information includes one or more dynamic attributes, and types of dynamic attributes in dynamic information that is of a same type and that is included in the dynamic information sets of the different set categories are different.

In some possible implementations, the target category indication information includes weather status information of an area in which the terminal device is located.

In some possible implementations, any piece of dynamic information includes one or more dynamic attributes, and attribute granularities of dynamic attributes that are of a same type and that are in a same type of dynamic information included in the dynamic information sets of the different set categories are different.

In some possible implementations, the target category indication information includes a tariff level of the terminal device.

In a specific implementation, for a process in which the processing unit 601 and the transceiver unit 602 implement the steps in the foregoing possible implementations, refer to a process performed by the service device in Embodiment 1. Details are not described herein again.

In embodiments of this application, the dynamic information sets correspond to a plurality of different set categories, and content of dynamic information corresponding to different set categories is different. In a process of pushing the dynamic information set to the terminal device, the service device first determines, based on the target category indication information corresponding to the terminal device, a set category (namely, the target set category) of a dynamic information set used by the terminal device, then generates the target dynamic information set of the target set category, and pushes the target dynamic information set to the terminal device. In this way, all content of dynamic information included in the target dynamic information set meets a requirement of the terminal device, and the service device does not push some useless dynamic information to the terminal device, so that communication resources and data processing resources of the service device and the terminal device can be saved.

An embodiment of this application further provides a computer-readable medium. The computer-readable medium stores a computer program. When the computer program is executed by a computer, the method or steps performed by the service device in Embodiment 1 are implemented.

An embodiment of this application further provides a computer program product. When the computer program product is executed by a computer, the method or steps performed by the service device in Embodiment 1 are implemented.

An embodiment of this application further provides a processor, configured to be coupled to a memory. The memory stores instructions. When the processor runs the instructions, the processor is enabled to perform the method or the functions performed by the service device in the foregoing implementation.

Refer to FIG. 6. The apparatus may alternatively be the terminal device in Embodiment 1. In this case, the transceiver unit 602 is configured to receive a target dynamic information set from a service device, where the target dynamic information set includes at least one type of target dynamic information. The processing unit 601 is configured to perform data parsing on the target dynamic information set based on a target set category corresponding to the target dynamic information set, to extract the at least one type of target dynamic information, where content of dynamic information included in dynamic information sets of different set categories is different.

In some possible implementations, the transceiver unit 602 is further configured to receive a target category indication identifier from the service device. The processing unit 601 is further configured to determine the target set category based on the target category indication identifier.

In some possible implementations, types of the dynamic information included in the dynamic information sets of the different set categories are different.

In some possible implementations, any piece of dynamic information includes one or more dynamic attributes, and types of dynamic attributes in dynamic information that is of a same type and that is included in the dynamic information sets of the different set categories are different.

In some possible implementations, any piece of dynamic information includes one or more dynamic attributes, and attribute granularities of dynamic attributes that are of a same type and that are in a same type of dynamic information included in the dynamic information sets of the different set categories are different.

In a specific implementation, for a process in which the processing unit 601 and the transceiver unit 602 implement the steps in the foregoing possible implementations, refer to a process performed by the terminal device in Embodiment 1. Details are not described herein again.

An embodiment of this application further provides a computer-readable medium. The computer-readable medium stores a computer program. When the computer program is executed by a computer, the method or steps performed by the terminal device in Embodiment 1 are implemented.

An embodiment of this application further provides a computer program product. When the computer program product is executed by a computer, the method or steps performed by the terminal device in Embodiment 1 are implemented.

Refer to FIG. 6. The apparatus may alternatively be the terminal device in Embodiment 2. In this case, the processing unit 601 is configured to determine a target set category from at least two preset set categories, where content of dynamic information included in dynamic information sets of different set categories is different, and any dynamic information set includes one or more pieces of dynamic information. The processing unit 601 is further configured to determine a target dynamic information set based on the target set category and at least one type of dynamic information.

In some possible implementations, the processing unit 601 is further configured to: obtain target category indication information corresponding to the terminal device, and determine a target set category from at least two preset set categories based on the target category indication information.

In some possible implementations, types of the dynamic information included in the dynamic information sets of the different set categories are different.

In some possible implementations, the target category indication information includes an autonomous driving level or a device sensing capability level of the terminal device.

In some possible implementations, any piece of dynamic information includes one or more dynamic attributes, and types of dynamic attributes in dynamic information that is of a same type and that is included in the dynamic information sets of the different set categories are different.

In some possible implementations, the target category indication information includes weather status information of an area in which the terminal device is located.

In some possible implementations, any piece of dynamic information includes one or more dynamic attributes, and attribute granularities of dynamic attributes that are of a same type and that are in a same type of dynamic information included in the dynamic information sets of the different set categories are different.

In some possible implementations, the target category indication information includes a tariff level of the terminal device.

In a specific implementation, for a process in which the processing unit 601 and the transceiver unit 602 implement the steps in the foregoing possible implementations, refer to a process performed by the terminal device in Embodiment 2. Details are not described herein again.

An embodiment of this application further provides a computer-readable medium. The computer-readable medium stores a computer program. When the computer program is executed by a computer, the method or steps performed by the terminal device in Embodiment 2 are implemented.

An embodiment of this application further provides a computer program product. When the computer program product is executed by a computer, the method or steps performed by the terminal device in Embodiment 2 are implemented.

In embodiments of this application, the terminal device first determines, from a plurality of preset set categories, a target category set corresponding to the terminal device, and then obtains, from at least one piece of dynamic information through screening based on the target category set, dynamic information used by the terminal device, and generates a target dynamic information set. In this way, the terminal device can be prevented from further processing useless dynamic information received by the terminal device, so that data processing resources of the terminal device can be saved.

FIG. 7 is a schematic diagram of another structure of an apparatus according to an embodiment of this application. A service device may be implemented in a form of the apparatus. The apparatus mainly includes at least one processor 701, at least one memory 702, and at least one wireless communication module 703. The processor 701, the memory 702, and the wireless communication module 703 are connected and communicate with each other through a communication bus or a communication interface. Herein, the processor 701 and the memory 702 may be configured to implement various functions of the service device that can be implemented by the processing unit 601 shown in FIG. 6, and the wireless communication module 703 may be configured to implement various functions of the service device that can be implemented by the transceiver unit 602 shown in FIG. 6.

The memory 702 is configured to store program code for performing the traffic-related dynamic information processing method implemented by the service device in Embodiment 1, and the processor 701 is configured to execute the program code stored in the memory 702 to implement the steps of the traffic-related dynamic information processing method performed by the service device in Embodiment 1. The wireless communication module 703 is configured to: send a message to or receive a message from an apparatus (for example, a terminal device) other than the apparatus.

For example, the processor 701 may be configured to: determine a target set category from at least two preset set categories based on target category indication information corresponding to the terminal device, and determine a target dynamic information set based on the target set category and at least one type of dynamic information. The wireless communication module 703 may send the target dynamic set to a terminal device. Alternatively, the wireless communication module 703 may forward, to the terminal device, dynamic information that is of a plurality of types and that is obtained by the processor 701 from another apparatus. For a specific process, refer to corresponding content described in Embodiment 1 above. Details are not described herein again.

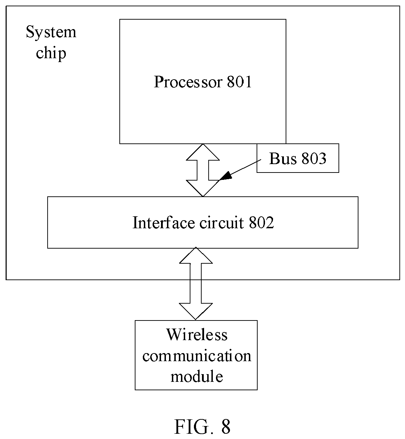

FIG. 8 is a schematic diagram of a structure of a chip according to an embodiment of this application. A service device may alternatively be implemented in a form of the chip. The chip may mainly include a processor 801 and one or more interface circuits 802 coupled to the processor 801. Herein, the processor 801 and the one or more interface circuits 802 coupled to the processor 801 may be configured to implement various functions of the service device that can be implemented by the processing unit 601 shown in FIG. 6, and a wireless communication module connected to the chip may be configured to implement various functions of the service device that can be implemented by the transceiver unit 602 shown in FIG. 6.

For example, the processor 801 may be configured to read and execute computer-readable instructions. In a specific implementation, the processor 801 may mainly include a controller, an arithmetic logic unit, and a register. For example, the controller is mainly responsible for decoding instructions and sending a control signal for an operation corresponding to the instructions. The arithmetic logic unit is mainly responsible for performing a fixed-point or floating-point arithmetic calculation operation, a shift operation, a logic operation, and the like, and may also perform an address calculation and address translation. The register is mainly responsible for storing a quantity of register operations, intermediate operation results, and the like that are temporarily stored in an instruction execution process. In a specific implementation, a hardware architecture of the processor 801 may be an application-specific integrated circuit (application-specific integrated circuits, ASIC) architecture, a microprocessor without interlocked piped stages architecture (microprocessor without interlocked piped stages architecture, MIPS) architecture, an advanced reduced instruction set computing machine (advanced RISC machine, ARM) architecture, an NP architecture, or the like. The processor 801 may be single-core or multi-core.

For example, the interface circuit 802 may be configured to input to-be-processed data to the processor 801, and may output a processing result of the processor 801 to the outside. In a specific implementation, the interface circuit 802 may be a general purpose input/output (general purpose input output, GPIO) interface, and may be connected to a plurality of peripheral devices (such as a wireless communication module and a sensing module). The interface circuit 802 is connected to the processor 801 through the bus 803.

In a specific implementation, the processor 801 may be configured to invoke, from the memory, code of the traffic-related dynamic information processing method implemented by the service device in Embodiment 1, so that the chip can implement the steps of the traffic-related dynamic information processing method implemented by the service device in Embodiment 1. For example, the wireless communication module may receive one or more pieces of dynamic information from an RSU or another cloud, and transmit the one or more pieces of dynamic information to the processor 801 via the interface circuit 802 and the bus 803. The processor 801 may generate a target dynamic information set based on a determined target set category that is obtained and the one or more pieces of dynamic information, and then transmit the target dynamic information set to the wireless communication module via the interface circuit 802 and the bus 803. Then, the wireless communication module may send the target dynamic information set to a terminal device. For specific implementation processes of these functions, refer to corresponding content described in Embodiment 1. Details are not described herein again.

It should be noted that functions corresponding to each of the processor 801 and the interface circuit 802 may be implemented by using a hardware design, may be implemented by using a software design, or may be implemented by using a combination of software and hardware. This is not limited herein.

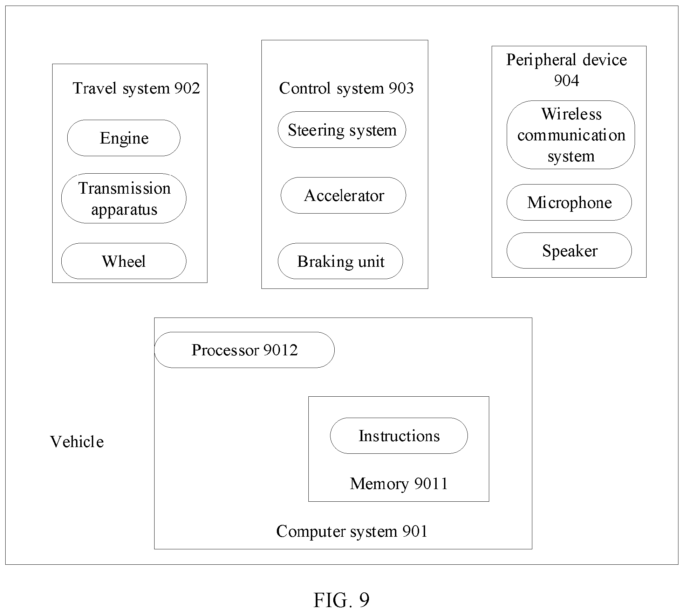

FIG. 9 is a schematic diagram of still another structure of an apparatus according to an embodiment of this application. The apparatus may be an intelligent vehicle, and a terminal device may be implemented in a form of the apparatus. It can be learned from FIG. 9 that the apparatus includes various systems, for example, a travel system 902, a control system 903, one or more peripheral devices 904, and a computer system 901. Optionally, the apparatus may include more or fewer systems, and each system may include a plurality of elements. In addition, systems of the apparatus may be interconnected in a wired or wireless manner.

The travel system 902 may include a component that provides power for the apparatus to move. In an embodiment, the travel system 902 may include an engine, a transmission apparatus, a wheel/tire, and the like.

The control system 903 may control operations of the apparatus and the component of the apparatus. The control system 903 may include various elements, for example, may include a steering system, an accelerator, and a braking unit.

The apparatus may further interact with another apparatus, another computer system, or a user via the peripheral device 904. The peripheral device 904 may include a wireless communication system, a microphone, a speaker, and/or the like.

The computer control system includes a processor 9012 and a memory 9011. The processor 9012 may be any conventional processor, for example, a commercially available CPU. Optionally, the processor may alternatively be a dedicated device such as an ASIC or another hardware-based processor. Although FIG. 9 functionally illustrates other elements of the processor, the memory, and the computer system in a same block, a person of ordinary skill in the art should understand that the processor, a computer, or the memory may actually include a plurality of processors, computers, or memories that may or may not be stored in a same physical housing.

In some embodiments, the memory 9011 may include instructions (for example, program logic), and the instructions may be executed by the processor 9012 to perform various functions that are of the apparatus and that include the functions described above. The memory 9011 may also include additional instructions, including instructions used to send data to, receive data from, interact with, and/or control one or more of a push system, a sensor system, the control system, and the peripheral device.

Optionally, the foregoing components are merely examples. In an actual application, components in each system may be added or deleted based on an actual requirement. FIG. 9 should not be understood as a limitation on embodiments of the present application.

It should be noted that the processing unit 601 in FIG. 6 may be the computer system 901 in the apparatus, and the transceiver unit 602 may be the wireless communication system in the apparatus.

In a specific implementation, when the foregoing systems cooperate with each other and enable the apparatus to be in a normal working state, the memory 9011 may store code corresponding to the traffic-related dynamic information processing method performed by the terminal device in Embodiment 1 or Embodiment 2. The processor 9012 may execute the code, to implement the steps in the traffic-related dynamic information processing method performed by the terminal device in Embodiment 1 or Embodiment 2. Herein, for a process in which the processor 9012 executes the code to implement the steps in the traffic-related dynamic information processing method performed by the terminal device, refer to the process described in Embodiment 1 or Embodiment 2. Details are not described herein again.

Refer to FIG. 7. The terminal device may also be implemented in a form of the apparatus. In this case, the memory 702 is configured to store program code for performing the traffic-related dynamic information processing method implemented by the terminal device in Embodiment 1 or Embodiment 2, and the processor 701 is configured to execute the program code stored in the memory 702 to implement steps of the traffic-related dynamic information processing method performed by the terminal device in Embodiment 1 or Embodiment 2. The wireless communication module 703 is configured to send a message to or receive a message from another apparatus (for example, a service device or another terminal device) other than the apparatus.

For example, the wireless communication module 703 may receive at least one piece of dynamic information from the service device and transmit the at least one piece of dynamic information to the processor 701.

The processor 701 may be configured to: determine a target set category from at least two preset set categories based on target category indication information corresponding to the terminal device, and determine a target dynamic information set based on the target set category and the at least one type of dynamic information. The wireless communication module 703 may alternatively forward a target dynamic information set determined by the processor 701 to another terminal device. For a specific process, refer to corresponding content described in Embodiment 1 or Embodiment 2. Details are not described herein again.

When the apparatus shown in FIG. 6 is a terminal device, the processor 701 and the memory 702 may be specific implementation forms of the processing unit 601, and the wireless communication module 703 may be a specific implementation form of the transceiver unit 602. In other words, the processor 701 and the memory 702 may be configured to implement various functions of the terminal device that can be implemented by the processing unit 601, and the wireless communication module 703 may be configured to implement various functions of the terminal device that can be implemented by the transceiver unit 602.

Refer to FIG. 8. The terminal device may also exist in a form of the chip. The processor 801 may be configured to read and execute computer-readable instructions. In a specific implementation, the processor 801 may mainly include a controller, an arithmetic logic unit, and a register. For example, the controller is mainly responsible for decoding instructions and sending a control signal for an operation corresponding to the instructions. The arithmetic logic unit is mainly responsible for performing a fixed-point or floating-point arithmetic calculation operation, a shift operation, a logic operation, and the like, and may also perform an address calculation and address translation. The register is mainly responsible for storing a quantity of register operations, intermediate operation results, and the like that are temporarily stored in an instruction execution process. In a specific implementation, a hardware architecture of the processor 801 may be an application-specific integrated circuit (application-specific integrated circuits, ASIC) architecture, a microprocessor without interlocked piped stages architecture (microprocessor without interlocked piped stages architecture, MIPS) architecture, an advanced reduced instruction set computing machine (advanced RISC machine, ARM) architecture, an NP architecture, or the like. The processor 801 may be single-core or multi-core. The interface circuit 802 may be configured to input to-be-processed data to the processor 801, and may output a processing result of the processor 801 to the outside. In a specific implementation, the interface circuit 802 may be a general purpose input/output (general purpose input output, GPIO) interface, and may be connected to a plurality of peripheral devices (such as a wireless communication module and a sensing module). The interface circuit 802 is connected to the processor 801 through the bus 803.

In a specific implementation, the processor 801 may be configured to invoke, from the memory, code of the traffic-related dynamic information processing method implemented by the terminal device in Embodiment 1 or Embodiment 2, so that the chip can implement the steps of the traffic-related dynamic information processing method implemented by the terminal device in Embodiment 1 or Embodiment 2. The memory may be integrated into the processor 801, or may be coupled to the chip via the interface circuit 802. In other words, the memory may be a part of the chip, or may be independent of the chip. The interface circuit 802 may be configured to output an execution result of the processor 801.

It should be noted that functions corresponding to each of the processor 801 and the interface circuit 802 may be implemented by using a hardware design, may be implemented by using a software design, or may be implemented by using a combination of software and hardware. This is not limited herein.

When the apparatus shown in FIG. 6 is a terminal device, the processor 801 and the interface circuit 802 may be specific implementation forms of the processing unit 601, and the wireless communication module connected to the chip may be a specific implementation form of the transceiver unit 602. In other words, the processor 801 and the interface circuit 802 may be configured to implement various functions of the terminal device that can be implemented by the processing unit 601, and the connected wireless communication module may be configured to implement various functions of the terminal device that can be implemented by the transceiver unit 602.

In embodiments of this application, the processor may be a general-purpose central processing unit (CPU), a microprocessor, an application-specific integrated circuit (application-specific integrated circuit, ASIC), or one or more integrated circuits for controlling program execution of the foregoing solution.

The memory may be a read-only memory (read-only memory, ROM), another type of static storage device that can store static information and instructions, a random access memory (random access memory, RAM), or another type of dynamic storage device that can store information and instructions; or may be an electrically erasable programmable read-only memory (Electrically Erasable Programmable Read-Only Memory, EEPROM), a compact disc read-only memory (Compact Disc Read-Only Memory, CD-ROM) or another compact disc storage, an optical disc storage (including a compressed optical disc, a laser disc, an optical disc, a digital versatile disc, a Blu-ray disc, and the like), a magnetic disk storage medium or another magnetic storage device, or any other medium that can be used to carry or store expected program code in a form of an instruction or a data structure and that can be accessed by a computer, but is not limited thereto. The memory may exist independently, and is connected to the processor through the bus. Alternatively, the memory may be integrated with the processor.

The wireless communication module or the wireless communication system may be an apparatus or a module, for example, a radio frequency module, that can implement communication with another device or a communication network.

All or some of the foregoing method embodiments may be implemented by using software, hardware, firmware, or any combination thereof. When software is used to implement the foregoing embodiments, all or some of embodiments may be implemented in a form of a computer program product. The computer program product includes one or more computer instructions. When the computer instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber Line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state drive, SSD)), or the like.

It should be understood that the terms "system" and "network" may be usually used interchangeably in embodiments of this application. The term "and/or" in embodiments describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

A person of ordinary skill in the art may be aware that, in combination with the examples described in embodiments disclosed in this specification, units and algorithm steps can be implemented by electronic hardware, computer software, or a combination thereof. To clearly describe interchangeability between the hardware and the software, the foregoing has generally described compositions and steps of each example based on functions. Whether the functions are performed by hardware or software depends on particular applications and design constraints of the technical solution. A person skilled in the art may use different methods to implement the described functions for each particular application, but it should not be considered that the implementation goes beyond the scope of this application.

In embodiments provided in this application, it should be understood that the disclosed systems, apparatuses, and methods may be implemented in other manners. For example, the foregoing apparatuses are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

In conclusion, the foregoing descriptions are merely exemplary embodiments of the technical solutions in this application, but are not intended to limit the protection scope of this application. Any modification, equivalent replacement, or improvement made without departing from the principle of this application shall fall within the protection scope of this application.

**Claims**

1. A traffic-related dynamic information processing method, wherein the processing method comprises:

   determining a target set category from at least two preset set categories based on target category indication information corresponding to a terminal device, wherein different category indication information corresponds to different set categories, content of dynamic information comprised in dynamic information sets of different set categories is different, and any dynamic information set comprises one or more pieces of dynamic information; and
   determining a target dynamic information set based on the target set category and at least one type of dynamic information, and sending the target dynamic set to the terminal device.

2. The processing method according to claim 1, wherein the processing method further comprises:
   sending a target category indication identifier to the terminal device, wherein the target category indication identifier is used by the terminal device to determine the target set category.

3. The processing method according to claim 1 or 2, wherein types of the dynamic information comprised in the dynamic information sets of the different set categories are different.

4. The processing method according to claim 3, wherein the target category indication information comprises an autonomous driving level or a device sensing capability level of the terminal device.

5. The processing method according to any one of claims 1 to 4, wherein any piece of dynamic information comprises one or more dynamic attributes, and types of dynamic attributes in dynamic information that is of a same type and that is comprised in the dynamic information sets of the different set categories are different.

6. The method according to claim 5, wherein the target category indication information comprises weather status information of an area in which the terminal device is located.

7. The processing method according to any one of claims 1 to 6, wherein any piece of dynamic information comprises one or more dynamic attributes, and attribute granularities of dynamic attributes that are of a same type and that are in a same type of dynamic information comprised in the dynamic information sets of the different set categories are different.

8. The processing method according to claim 7, wherein the target category indication information comprises a tariff level of the terminal device.

9. A traffic-related dynamic information processing method, wherein the processing method comprises:

   receiving a target dynamic information set from a service device, wherein the target dynamic information set comprises at least one type of target dynamic information; and
   performing data parsing on the target dynamic information set based on a target set category corresponding to the target dynamic information set, to extract the at least one type of target dynamic information, wherein content of dynamic information comprised in dynamic information sets of different set categories is different.

10. The processing method according to claim 9, wherein the processing method further comprises:

    receiving a target category indication identifier from the service device; and
    determining the target set category based on the target category indication identifier.

11. The processing method according to claim 9 or 10, wherein types of the dynamic information comprised in the dynamic information sets of the different set categories are different.

12. The processing method according to any one of claims 9 to 11, wherein any piece of dynamic information comprises one or more dynamic attributes, and types of dynamic attributes in dynamic information that is of a same type and that is comprised in the dynamic information sets of the different set categories are different.

13. The processing method according to any one of claims 9 to 12, wherein any piece of dynamic information comprises one or more dynamic attributes, and attribute granularities of dynamic attributes that are of a same type and that are in a same type of dynamic information comprised in the dynamic information sets of the different set categories are different.

14. An apparatus, wherein the apparatus is a service device, and the apparatus comprises:

   a processing unit, configured to determine a target set category from at least two preset set categories based on target category indication information corresponding to a terminal device, wherein different category indication information corresponds to different set categories, content of dynamic information comprised in dynamic information sets of different set categories is different, and any dynamic information set comprises one or more pieces of dynamic information, wherein
   the processing unit is further configured to determine a target dynamic information set based on the target set category and at least one type of dynamic information; and
   a transceiver unit, configured to send the target dynamic set to the terminal device.

15. The apparatus according to claim 14, wherein the transceiver unit is configured to:
   send a target category indication identifier to the terminal device, wherein the target category indication identifier is used by the terminal device to determine the target set category.

16. The apparatus according to claim 14 or 15, wherein types of the dynamic information comprised in the dynamic information sets of the different set categories are different.

17. The apparatus according to claim 16, wherein the target category indication information comprises an autonomous driving level or a device sensing capability level of the terminal device.

18. The apparatus according to any one of claims 14 to 17, wherein any piece of dynamic information comprises one or more dynamic attributes, and types of dynamic attributes in dynamic information that is of a same type and that is comprised in the dynamic information sets of the different set categories are different.

19. The apparatus according to claim 18, wherein the target category indication information comprises weather status information of an area in which the terminal device is located.

20. The apparatus according to any one of claims 14 to 19, wherein any piece of dynamic information comprises one or more dynamic attributes, and attribute granularities of dynamic attributes that are of a same type and that are in a same type of dynamic information comprised in the dynamic information sets of the different set categories are different.

21. The apparatus according to claim 20, wherein the target category indication information comprises a tariff level of the terminal device.

22. A communication apparatus, wherein the apparatus is a terminal device, and the apparatus comprises:

   a transceiver unit, configured to receive a target dynamic information set from a service device, wherein the target dynamic information set comprises at least one type of target dynamic information; and
   a processing unit, configured to perform data parsing on the target dynamic information set based on a target set category corresponding to the target dynamic information set, to extract the at least one type of target dynamic information, wherein content of dynamic information comprised in dynamic information sets of different set categories is different.

23. The apparatus according to claim 22, wherein the transceiver unit is further configured to receive a target category indication identifier from the service device; and
   the processing unit is further configured to determine the target set category based on the target category indication identifier.

**24.** The apparatus according to claim 22 or 23, wherein types of the dynamic information comprised in the dynamic information sets of the different set categories are different.

**25.** The apparatus according to any one of claims 22 to 24, wherein any piece of dynamic information comprises one or more dynamic attributes, and types of dynamic attributes in dynamic information that is of a same type and that is comprised in the dynamic information sets of the different set categories are different.

**26.** The apparatus according to any one of claims 22 to 25, wherein any piece of dynamic information comprises one or more dynamic attributes, and attribute granularities of dynamic attributes that are of a same type and that are in a same type of dynamic information comprised in the dynamic information sets of the different set categories are different.

**27.** A readable storage medium, configured to store instructions, wherein when the instructions are executed, the processing method according to any one of claims 1 to 11, claims 1 to 8, or claims 9 to 13 is implemented.

**28.** An apparatus, comprising a processor and a memory, wherein

the memory is configured to store a computer program; and
the processor is configured to execute the computer program stored in the memory, to enable the communication apparatus to perform the processing method according to any one of claims 1 to 8 or claims 9 to 13.

Service device

Communication
network

Terminal
device

FIG. 1

Service device

Terminal device

S110: Determine a target set
category from at least two
preset set categories based on
target category indication
information corresponding to
the terminal device

S120: Determine a target
dynamic information set based
on the target set category and at
least one type of dynamic
information

S130: Send the target
dynamic information set

FIG. 2

| Service device | Terminal device |
|---|---|

S140: Determine target category indication information corresponding to the terminal device

S140: Send the target category indication information corresponding to the terminal device

S110: Determine a target set category from at least two preset set categories based on the target category indication information corresponding to the terminal device

S120: Determine a target dynamic information set based on the target set category and at least one type of dynamic information

S130: Send the target dynamic information set

FIG. 3

Service device

Terminal device

S110: Determine a target set category from at least two preset set categories based on target category indication information corresponding to the terminal device

S120: Determine a target dynamic information set based on the target set category and at least one type of dynamic information

S130: Send the target dynamic information set

S150: Receive the target dynamic information set, and perform data parsing on the target dynamic information set based on the target set category, to extract at least one type of target dynamic information

FIG. 4

```
┌─────────────────────────────────┐          S210
│  Determine a target set category│         ╱
│    from at least two preset set  │────────
│           categories             │
└─────────────────────────────────┘
                 │
                 │
┌─────────────────────────────────┐          S220
│    Determine a target dynamic    │         ╱
│  information set based on the target│──────
│ set category and at least one type of│
│       dynamic information        │
└─────────────────────────────────┘
```

FIG. 5

```
┌──────────────────────────────────────────────┐
│                                                │
│  ┌──────────────┐              ┌─────────────┐ │
│  │ Processing   │──────────────│ Transceiver │ │
│  │  unit 601    │              │  unit 602   │ │
│  └──────────────┘              └─────────────┘ │
│                                                │
└──────────────────────────────────────────────┘
```

FIG. 6

```
┌──────────────────────────────────────────────────────────┐
│                                                            │
│   ┌──────────────┐     ┌──────────────────────────────┐   │
│   │ Processor 701│     │         Memory 702           │   │
│   │              │     │  ┌ ─ ─ ─ ─ ─ ─ ─ ─ ─ ─ ─ ┐  │   │
│   └──────────────┘     │    Program code           │  │   │
│          │             │  └ ─ ─ ─ ─ ─ ─ ─ ─ ─ ─ ─ ┘  │   │
│   ┌──────┴───────┐     └──────────────────────────────┘   │
│   │   Wireless   │                                        │
│   │communication │                                        │
│   │  module 703  │                                        │
│   └──────────────┘                                        │
└──────────────────────────────────────────────────────────┘
```

FIG. 7

System
chip

Processor 801

Bus 803

Interface circuit 802

Wireless
communication
module

FIG. 8

Travel system 902

Engine

Transmission apparatus

Wheel

Control system 903

Steering system

Accelerator

Braking unit

Peripheral device 904

Wireless communication system

Microphone

Speaker

Vehicle

Processor 9012

Instructions

Memory 9011

Computer system 901

FIG. 9

## INTERNATIONAL SEARCH REPORT

International application No.

**PCT/CN2021/131568**

### A. CLASSIFICATION OF SUBJECT MATTER

G06F 13/12(2006.01)i

According to International Patent Classification (IPC) or to both national classification and IPC

### B. FIELDS SEARCHED

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNPAT, WPI, EPODOC, CNKI, IEEE: 汽车, 交通, 动态信息, 自动驾驶, 服务器, 终端, 目标, 类别, 集合, 筛选, auto, traffic, dynamic, information, automatic, driv+, server, terminal, target, category, set, filter+

### C. DOCUMENTS CONSIDERED TO BE RELEVANT

| Category* | Citation of document, with indication, where appropriate, of the relevant passages | Relevant to claim No. |
|---|---|---|
| X | CN 108648489 A (HUBEI UNIVERSITY OF ARTS AND SCIENCE) 12 October 2018 (2018-10-12) description, paragraphs 29-134 | 1-28 |
| A | CN 108922188 A (HEBEI DEGUROON ELECTRONIC TECHNOLOGY CO., LTD.) 30 November 2018 (2018-11-30) entire document | 1-28 |
| A | CN 109285373 A (NANJING JINHE JIAXIN INFORMATION TECH CO., LTD.) 29 January 2019 (2019-01-29) entire document | 1-28 |
| A | US 2019377825 A1 (MICROSOFT TECHNOLOGY LICENSING L.L.C.) 12 December 2019 (2019-12-12) entire document | 1-28 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **03 February 2022** | **16 February 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/131568**

| Patent document cited in search report | | | Publication date (day/month/year) | Patent family member(s) | | | Publication date (day/month/year) |
|---|---|---|---|---|---|---|---|
| CN | 108648489 | A | 12 October 2018 | None | | | |
| CN | 108922188 | A | 30 November 2018 | None | | | |
| CN | 109285373 | A | 29 January 2019 | None | | | |
| US | 2019377825 | A1 | 12 December 2019 | WO | 2019236360 | A1 | 12 December 2019 |
| | | | | AR | 115501 | A1 | 27 January 2021 |

Form PCT/ISA/210 (patent family annex) (January 2015)

**EP 4 280 071 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110090015